(19)

Europäisches Patentamt
European Patent Office
Office européen des brevets

(11) **EP 4 556 980 A1**

(12) **EUROPEAN PATENT APPLICATION**
published in accordance with Art. 153(4) EPC

(43) Date of publication:
**21.05.2025 Bulletin 2025/21**

(21) Application number: **23852788.1**

(22) Date of filing: **20.07.2023**

(51) International Patent Classification (IPC):
$G02B\ 13/00^{(2006.01)}$     $G02B\ 9/60^{(2006.01)}$
$G02B\ 13/18^{(2006.01)}$     $G02B\ 3/02^{(2006.01)}$
$G02B\ 3/00^{(2006.01)}$     $G03B\ 30/00^{(2021.01)}$

(52) Cooperative Patent Classification (CPC):
**G02B 3/00; G02B 3/02; G02B 9/60; G02B 13/00;
G02B 13/18; G03B 30/00**

(86) International application number:
**PCT/KR2023/010504**

(87) International publication number:
**WO 2024/034907 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 KR 20220101194
19.09.2022 KR 20220117807**

(71) Applicant: **Samsung Electronics Co., Ltd.
Suwon-si, Gyeonggi-do 16677 (KR)**

(72) Inventors:
• **KIM, Dongwoo
  Suwon-si Gyeonggi-do 16677 (KR)**
• **BAE, Jaecheol
  Suwon-si Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57)     According to an embodiment of the present disclosure, a lens assembly may comprise: an aperture; an image sensor that includes an image-forming surface receiving at least a portion of light incident through the aperture and that is aligned with the aperture on the optical axis; and five lenses sequentially arranged between the aperture and the image sensor along the optical axis direction, the five lenses comprising a first lens that is disposed closest to the aperture and has positive refractive power, a second lens that is disposed second from the aperture and has negative refractive power, a third lens that is disposed third from the aperture, a fourth lens that is disposed fourth from the aperture, and a fifth lens that is disposed closest to the image sensor and has positive refractive power. By satisfying [conditional expression]s proposed by embodiment(s), the lens assembly may be reduced in size and combined with a high-resolution image sensor so as to provide excellent wide-angle performance. Various other embodiments may be possible.

FIG. 5

**Description**

[Technical Field]

Embodiment(s) of the disclosure relate to a lens assembly, for example, a lens assembly including a plurality of lenses and an electronic device including the same.

[Background Art]

Optical devices, for example, cameras capable of capturing images or videos have been widely used, and digital cameras and video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than film-based optical devices.

Recently, a plurality of optical devices, for example, two or more selected ones of a close-up camera, a telephoto camera, and/or a wide-angle camera have been mounted in a single electronic device to improve the quality of a captured image and provide various visual effects to the captured image. For example, a plurality of cameras with different optical characteristics may be used to obtain images of a subject and synthesize them to obtain a high-quality captured image. As electronic devices such as mobile communication terminals or smartphones are equipped with a plurality of optical devices (e.g., cameras) and thus obtain high-quality captured images, they are gradually replacing electronic devices specialized for a shooting function, such as digital compact cameras, and are expected to replace high-performance cameras such as digital single-lens reflex cameras (e.g., DSLRs) in the future.

The above information is presented as background information only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, a lens assembly includes an aperture, an image sensor including an imaging plane receiving at least a portion of light incident through the aperture, and aligned with the aperture on an optical axis, and five lenses sequentially arranged along a direction of the optical axis between the aperture and the image sensor, and including a first lens disposed closest to the aperture and having a positive refractive power, a second lens disposed second from the aperture and having a negative refractive power, a third lens disposed third from the aperture, a fourth lens disposed fourth from the aperture, and a fifth lens disposed closest to the image sensor and having a positive refractive power. The lens assembly satisfies the following [Conditional Expression 1], [Conditional Expression 2], and [Conditional Expression 3].

[Conditional Expression 1]

$$0.55 \leq \frac{OAL}{2IH} \leq 0.7$$

[Conditional Expression 2]

$$-0.05 \leq \frac{T23 - T12}{EFL} \leq 0.05$$

[Conditional expression 3]

$$90 =< FOV =< 110$$

Herein, "OAL" is a distance between an object-side surface or an aperture-side surface of the first lens L1 and the imaging plane, measured on the optical axis, "IH" is a maximum height of the imaging plane, "T12" is a gap between the first lens and the second lens, measured on the optical axis, "T23" is a gap between the second lens and the third lens, measured on the optical axis, "EFL" is a total focal length of the lens assembly, and "FOV" is a field of view of the lens assembly.

According to an embodiment of the disclosure, an electronic device includes a lens assembly, and a processor configured to obtain an image of a subject using the lens assembly. In an embodiment, a lens assembly includes an aperture, an image sensor including an imaging plane receiving at least a portion of light incident through the aperture, and aligned with the aperture on an optical axis, and five lenses sequentially arranged along a direction of the optical axis between the aperture and the image sensor, and including a first lens disposed closest to the aperture and having a positive refractive power, a second lens disposed second from the aperture and having a negative refractive power, a third lens disposed third from the aperture, a fourth lens disposed fourth from the aperture, and a fifth lens disposed closest to the image sensor and having a positive refractive power. The lens assembly satisfies the following [Conditional Expression 8], [Conditional Expression 9], and [Conditional Expression 10].

[Conditional Expression 8]

$$0.55 \leq \frac{OAL}{2IH} \leq 0.7$$

[Conditional Expression 9]

$$-0.05 \leq \frac{T23 - T12}{EFL} \leq 0.05$$

[Conditional expression 10]

$$90 =< FOV =< 110$$

Herein, "OAL" is a distance between an object-side surface or an aperture-side surface of the first lens L1 and the imaging plane, measured on the optical axis, "IH" is a maximum height of the imaging plane, "T12" is a gap between the first lens and the second lens, measured on the optical axis, "T23" is a gap between the second lens and the third lens, measured on the optical axis, "EFL" is a total focal length of the lens assembly, and "FOV" is a field of view of the lens assembly.

[Brief Description of Drawings]

The above or other aspects, configurations, and/or advantages of embodiment(s) of the disclosure will be apparent from the following detailed description with reference to the accompanying drawings.

FIG. 1 is a block diagram illustrating an electronic device in a network environment according to an embodiment of the disclosure.
FIG. 2 is a block diagram illustrating an exemplary camera module according to an embodiment of the disclosure.
FIG. 3 is a perspective view illustrating a front surface of an electronic device according to an embodiment of the disclosure.
FIG. 4 is a perspective view illustrating a rear surface of the electronic device of FIG. 3 according to an embodiment of the disclosure.
FIG. 5 is a diagram illustrating a lens assembly according to an embodiment of the disclosure.
FIG. 6 is a graph illustrating spherical aberration of the lens assembly of FIG. 5 according to an embodiment of the disclosure.
FIG. 7 is a graph illustrating astigmatism of the lens assembly of FIG. 5 according to an embodiment of the disclosure.
FIG. 8 is a graph illustrating distortion rates of the lens assembly of FIG. 5 according to an embodiment of the disclosure.
FIG. 9 is a diagram illustrating a lens assembly according to an embodiment of the disclosure.
FIG. 10 is a graph illustrating spherical aberration of the lens assembly of FIG. 9 according to an embodiment of the disclosure.
FIG. 11 is a graph illustrating astigmatism of the lens assembly of FIG. 9 according to an embodiment of the disclosure.
FIG. 12 is a graph illustrating distortion rates of the lens assembly of FIG. 9 according to an embodiment of the disclosure.
FIG. 13 is a diagram illustrating a lens assembly according to an embodiment of the disclosure.
FIG. 14 is a graph illustrating spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion rates of the lens assembly of FIG. 13 according to an embodiment of the disclosure.

FIG. 17 is a diagram illustrating a lens assembly according to an embodiment of the disclosure.

FIG. 18 is a graph illustrating spherical aberration of the lens assembly of FIG. 17 according to an embodiment of the disclosure.

FIG. 19 is a graph illustrating astigmatism of the lens assembly of FIG. 17 according to an embodiment of the disclosure.

FIG. 20 is a graph illustrating distortion rates of the lens assembly of FIG. 17 according to an embodiment of the disclosure.

Throughout the accompanying drawings, like reference numerals may be assigned to like parts, components, and/or structures.

[Mode for Carrying out the Invention]

A single miniaturized electronic device may include a standard camera, a wide-angle (or ultra-wide-angle) camera, a close-up camera, and/or a telephoto camera to obtain a plurality of images of an object and synthesize them into a high-quality image. Cameras or lens assemblies may be classified into a standard camera, a wide-angle (or ultra-wide-angle) camera, a close-up camera, and/or a telephoto camera depending on their fields of view (or focal lengths). Since a display large enough to provide a sufficiently large screen is mounted on a portable electronic device such as a smartphone, portability may be secured by reducing the thickness or weight of the electronic device. A lens assembly in a folded structure using a refractive member (or a reflective member) may provide good telephoto performance, when mounted on a miniaturized electronic device because it has a high degree of design freedom in arrangement of lens(es) or an image sensor. However, as the performance of the image sensor becomes more advanced, for example, as it becomes larger or has higher pixels, it may be difficult to secure a corresponding wide-angle performance. For example, when the effective diameter of the lens(es) increases or a larger number of lenses are used, wide-angle performance corresponding to a high-performance image sensor may be achieved, but it may be difficult to mount the lens(es) on the miniaturized electronic device.

Embodiment(s) of the disclosure are intended to at least address the above-described problems and/or disadvantages and at least provide the advantages described below, and may provide a miniaturized lens assembly for providing wide-angle performance (e.g., implementing a field of view of approximately 100 degrees) improved enough to satisfy the performance requirement of a high-performance image sensor, and/or an electronic device including the same.

Embodiment(s) of the disclosure may provide a lens assembly for facilitating control of optical performance, such as flare or aberration correction, and/or an electronic device including the same.

The technical objects to be achieved by the disclosure are not limited to those mentioned above, and other unmentioned technical objects may be clearly understood by those skilled in the art from the following description.

The following description of the attached drawings may provide an understanding of various exemplary implementations of the disclosure, including the claims and their equivalents. Exemplary embodiments disclosed in the following description include various specific details to aid understanding, but are to be considered as one of various exemplary embodiments. Accordingly, those skilled in the art will understand that various changes and modifications of the various implementations described herein may be made without departing from the scope and spirit of the disclosure. In addition, a description of well-known functions and configurations will be avoided for clarity and conciseness.

The terms and words used in the following description and claims are not limited to their referential meanings, but may be used to clearly and consistently describe an embodiment of the disclosure. Accordingly, it will be apparent to those skilled in the art that the following description of various implementations of the disclosure, which is intended to be in conformity with the claims, is provided solely for illustrative purposes, not for restrictive purposes.

Unless the context clearly dictates otherwise, it should be understood that the singular expressions of "a," "an," and "the" include plural referents. Thus, for example, a "component surface" may be meant to include one or more of the surfaces of a component.

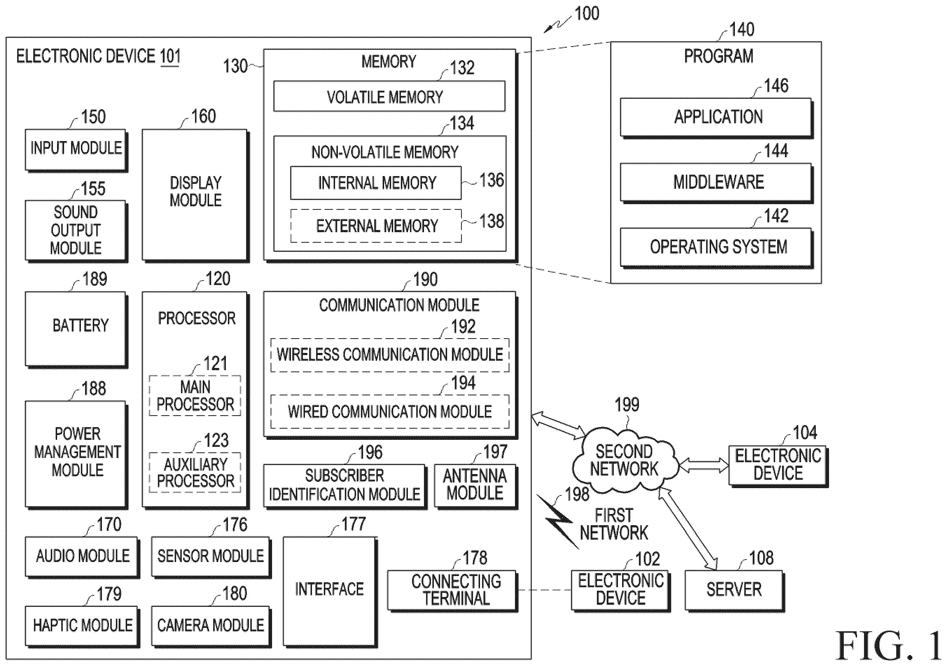

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., themmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form anmmWave antenna module. According to an embodiment, themmWave antenna module may include a printed circuit board, a RFIC disposed on a first surface (e.g., the bottom surface) of the printed circuit board, or adjacent to the first surface and capable of supporting a designated high-frequency band (e.g., themmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

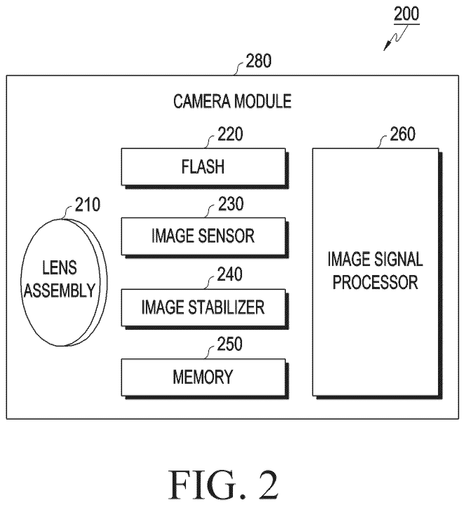

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. **In** such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect (e.g., image blurring) by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., a program) including one or more instructions that are stored in a storage medium (e.g., internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According embodiments, operations performed by the module, the program, or another component may be carried out sequentially, in parallel, repeatedly, or heuristically, or one or more of the operations may be executed in a different order or omitted, or one or more other operations may be added.

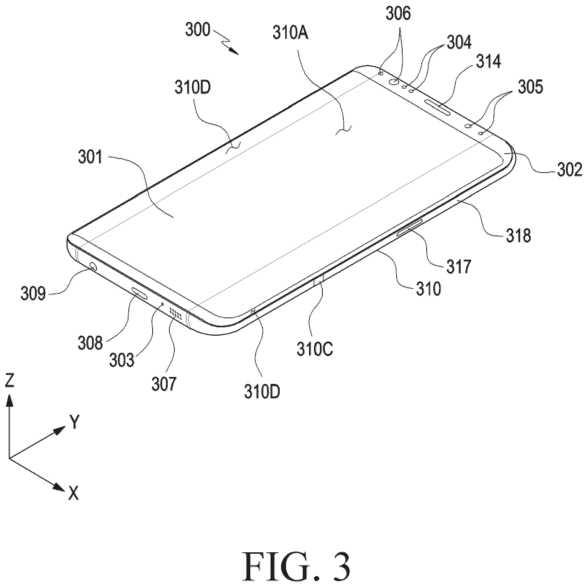

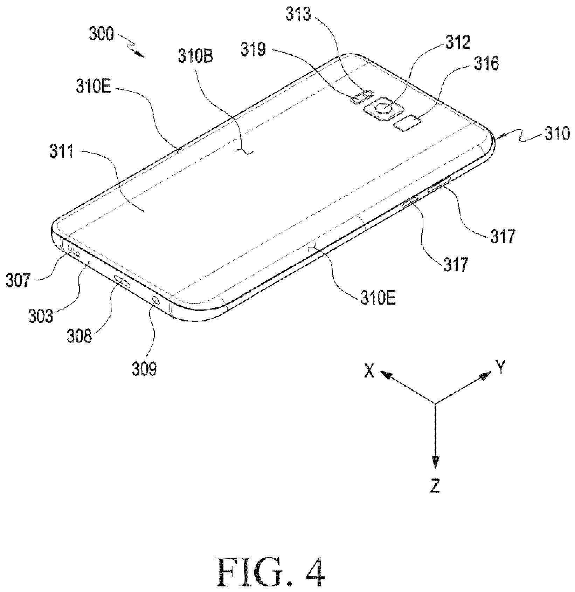

FIG. 3 is a perspective view illustrating a front surface of an electronic device 300 (e.g., the electronic device 101 in FIG. 1) according to an embodiment of the disclosure. FIG. 4 is a perspective view illustrating a rear surface of the electronic device 300 according to an embodiment of the disclosure.

Referring to FIGS. 3 and 4, the electronic device 300 (e.g., the electronic device 101 in FIG. 1) according to an embodiment may include a housing 310 which includes a first surface (or front surface) 310A, a second surface (or rear surface) 310B, and a side surface 310C surrounding a space between the first surface 310A and the second surface 310B. In an embodiment (not shown), the housing 310 may refer to a structure that forms a portion of the first surface 310A, the second surface 310B, and the side surfaces 310C of FIG. 3. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an inner space with the housing 310. In an embodiment, the term 'inner space' may refer to an interior space of the housing 310 that accommodates at least a portion of a display 301 to be described later or the display module 160 of FIG. 1.

According to an embodiment, the second surface 310B may be formed by a rear plate 311 which is substantially opaque. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In these embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, and 314, sensor modules 304, 316, and 319, camera modules 305, 312, and 313 (e.g., the camera module 180 or 280 in FIG. 1 or 2), key input devices 317, a light emitting element 306, or connector holes 308 and 309. In an embodiment, the electronic device 101 may not be provided with at least one (e.g., a key input device 317 or the light emitting element 306) of the components or may additionally include other components.

The display 301 (e.g., the display module 160 in FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of a screen display area (e.g., an active area) or an area (e.g., an inactive area) outside the screen display area, and at least one of the audio module 314 (e.g., the audio module 170 in FIG. 1), the sensor module 304 (e.g., the sensor module 176 in FIG. 1), the camera module 305, or the light emitting element 306, which is aligned with the recess or the opening, may be included. In an embodiment (not shown), at least one of the audio module 314, the sensor module 304, the camera modules 305 (e.g., an under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor.

The camera modules 305, 312, and 313 may include a front camera module 305 disposed on the first surface 310A of the electronic device 101, and a rear camera module 312 and/or a flash 313 disposed on the second surface 310B. The camera modules 305 and 312 may include one or more lenses, an image sensor, and/or an ISP. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

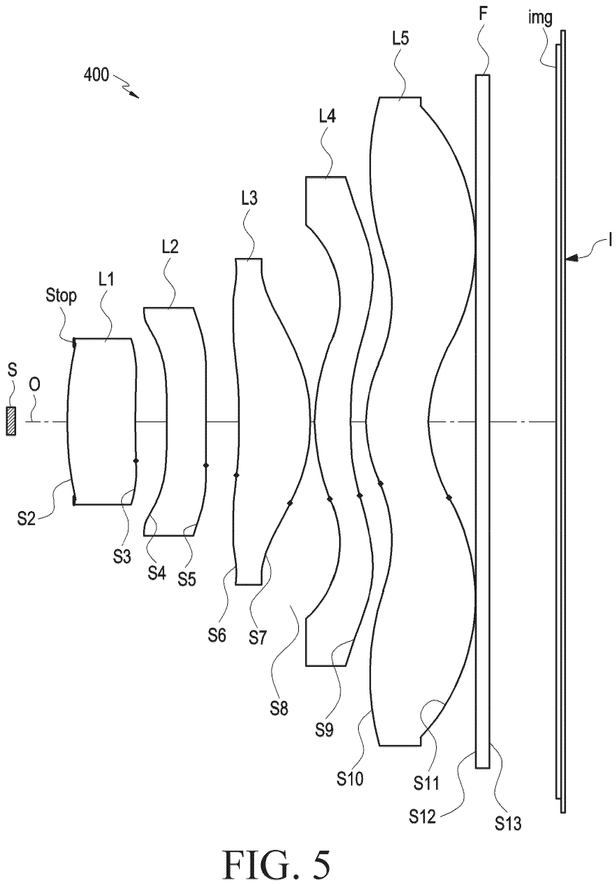

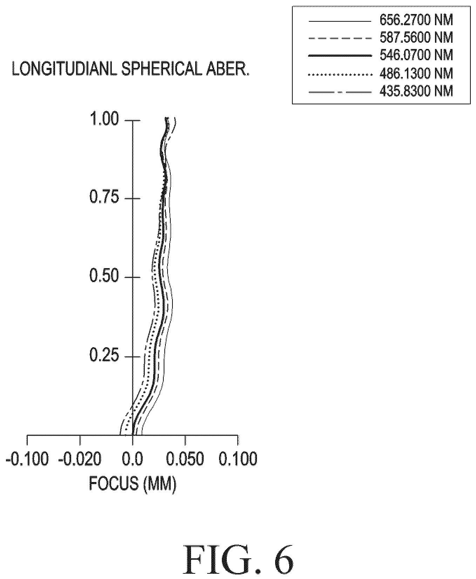

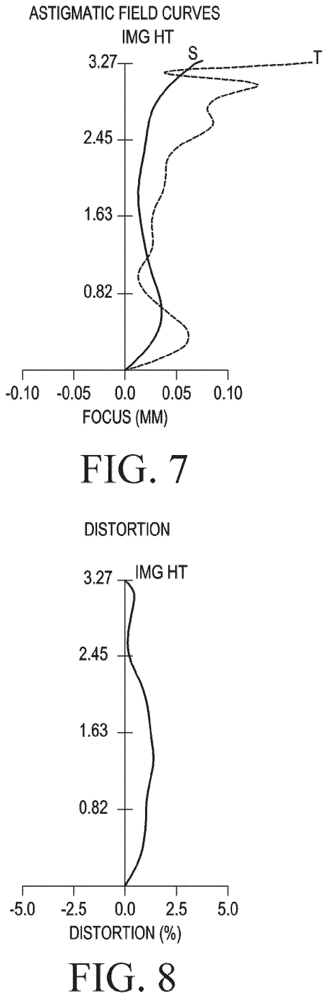

FIG. 5 is a diagram illustrating a lens assembly 400 according to an embodiment of the disclosure. FIG. 6 is a graph illustrating spherical aberration of the lens assembly 400 of FIG. 5 according to an embodiment of the disclosure. FIG. 7 is a graph illustrating astigmatism of the lens assembly 400 of FIG. 5 according to an embodiment of the disclosure. FIG. 8 is a graph illustrating distortion rates of the lens assembly 400 of FIG. 5 according to an embodiment of the disclosure.

FIG. 6 is a graph illustrating the spherical aberration of the lens assembly 400 according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light having a wavelength of 656.2700 nanometers (NM) (e.g., red), light having a wavelength of 587.5600NM (e.g., yellow), light having a wavelength of 546.0700NM, light having a wavelength of 486.1300NM (e.g., blue), and light having a wavelength of 435.8300NM. FIG. 7 is a graph illustrating the astigmatism of the lens assembly 400 according to an embodiment of the disclosure, for light having a wavelength of 546.0700NM, in which 'S' denotes a sagittal plane and 'T' denotes a tangential plane. FIG. 8 is a graph illustrating the distortion rates of the lens assembly 400 according to an embodiment of the disclosure, for light having a wavelength of 546.0700NM.

Referring to FIGS. 5 to 8, the lens assembly 400 (e.g., the lens assembly 210 in FIG. 2) according to one of various embodiments of the disclosure may include an aperture Stop, a plurality of (e.g., at least five) lenses L1, L2, L3, L4, and L5, and/or an image sensor I (e.g., an imaging plane img or the image sensor 230 in FIG. 2). The image sensor I or 230 may include the imaging plane img that receives at least a portion of light incident through the aperture Stop and/or focused through the lenses L1, L2, L3, L4, and L5. According to an embodiment, the aperture Stop, the lenses L1, L2, L3, L4, and L5, and/or the image sensor I or 230 may be aligned substantially on an optical axis O. "Aligned on the optical axis O" may be understood as meaning that an area through which light incident on the imaging plane of the image sensor I or 230 from the aperture Stop or the lens L1, L2, L3, L4, and L5 passes, or the imaging plane img of the image sensor I or 230 is aligned on the optical axis O.

According to an embodiment, the lens assembly 400 may further include an IR cut filter F. The IR cut filter F may block light (e.g., IR light) in a wavelength band that is not visible to the naked eye of a user but is detected by a film or the image sensor I. In an embodiment, depending on the purpose of the lens assembly 400 or an electronic device (e.g., the electronic devices (e.g., 101, 102, 104, and 300 in FIGS. 1 to 4), the IR cut filter F may be replaced with a bandpass filter that transmits IR light and blocks visible light. For example, the IR cut filter F may be replaced with a bandpass filter that transmits IR light in the lens assembly 400 or the electronic device used for detecting IR light.

According to an embodiment, the IR cut filter F and/or the image sensor I or 230 may described as a component separate from the lens assembly 400. For example, the IR cut filter F and/or the image sensor I or 230 may be mounted on the electronic device (e.g., the electronic device 101, 102, 104, or 300 in FIG. 1 or 4) or an optical device (e.g., the camera module 180 or 280 in FIG. 1 or 2), and the plurality of lenses L1, L2, L3, L4, and L5 included in the lens assembly 400 may be mounted on the electronic device or the optical device, in alignment with the IR cut filter F and/or the image sensor I or 230 on the optical axis O. In an embodiment, at least one of the lenses L1, L2, L3, L4, and L5 may be reciprocated along a direction of the optical axis O, and the electronic device (e.g., the electronic device 101, 102, 104, or 300 in FIG. 1 or 4) or the processor 120 of FIG. 1 may perform focusing adjustment or focal length adjustment by reciprocating at least one of the lenses L1, L2, L3, L4, and L5. In an embodiment, the lens assembly 400 may be disposed as one of the camera modules 305, 312, and 313 in FIG. 3 or 4.

According to an embodiment, the plurality of lenses L1, L2, L3, L4, and L5 may include a first lens L1, a second lens L2, a third lens L3, a fourth lens L4, and/or a fifth lens L5 arranged sequentially along the direction of the optical axis O between the aperture Stop and the image sensor I. Each of the lenses L1, L2, L3, L4, and L5 may include an object-side surface and an image sensor-side surface. In describing the following embodiments, it is to be noted that no reference numerals are assigned to some of the object-side surface(s) and the image sensor-side surface(s) of the lenses L1, L2, L3, L4, and L5, for simplicity of the drawings. Reference numerals which are not assigned to lens surfaces in the drawings will be readily understood from the tables described later regarding lens data in various embodiments.

In the following detailed description, the shapes of the object-side surfaces or image sensor-side surfaces of the lenses L1, L2, L3, L4, and L5 may be described with the term 'concave' or 'convex'. Such references to the shapes of the lens surfaces may describe the shape of a point intersecting with the optical axis O or a paraxial region intersecting with the optical axis O. When it is said that an 'object-side surface is concave', this may describe a shape in which the center of the radius of curvature of the object-side surface is located closer to an object S. When it is said that an 'object-side surface is convex', this may describe a shape in which the center of the radius of curvature of the object-side surface is located closer to the image sensor I. When it is said that an 'image sensor-side surface is concave', this may describe a shape in which the center of the radius of curvature of the image sensor-side surface is located closer to the image sensor I. When it is said that an 'image sensor-side surface is convex', this may describe a shape in which the center of the radius of curvature of the image-sensor side surface is located closer to the object S. For example, in FIG. 5, an object-side surface S2 of the first lens L1 may be understood as convex, and an object-side surface S4 of the second lens L2 may be understood as concave.

According to an embodiment, the first lens L1, which is a lens disposed closest to the object S or the aperture Stop, may have a positive refractive power. In an embodiment, the first lens L1 may be a meniscus lens convex toward the object S. For example, the object-side surface S2 of the first lens L1 may be convex, and an image sensor-side surface S3 thereof including an inflection point may be concave. An 'inflection point' may mean a point where the radius of curvature is changed in sign from negative (-) to positive (+) or vice versa, and each of the lenses L1, L2, L3, L4, and L5 may include an inflection point on at least one of its object-side surface or image sensor-side surface. Since each of the lenses L1, L2, L3, L4, and L5 includes inflection point(s), the lens assembly 400 may have improved wide-angle performance (e.g., a field of view of approximately 100 degrees). In an embodiment, since each of the lenses L1, L2, L3, L4, and L5 includes inflection point(s), it may be easy to control optical performance (e.g., aberration correction) in a paraxial region or a marginal region, and the lens assembly 400 may be miniaturized. It is to be noted that in FIG. 5, the inflection point(s) are denoted by symbol '♦' and are not assigned reference numbers. In an embodiment, the first lens L1 may be a plastic aspherical lens having a refractive index of approximately 1.55 or less. Since the first lens L1 has a meniscus shape convex toward the object S, the total length of the lens assembly 400 (e.g., a distance from the object-side surface S2 of the first lens L1 to the imaging plane img) may be reduced. In an embodiment, as the first lens L1 includes an inflection point at least on the image sensor-side surface S3, the first lens L1 may have a small effective diameter and achieve good optical performance in a marginal region.

According to an embodiment, the second lens L2 is disposed second from the aperture Stop and may have a negative refractive power. In an embodiment, the second lens L2 may have concave shapes on both of the object-side surface S4 and an image sensor-side surface S5 and include an inflection point on the image sensor-side surface S5. The second lens L2 may have a small effective diameter and achieve good optical performance in a marginal region by including inflection point(s). In an embodiment, the second lens L2 may be a plastic aspherical lens having a refractive index of about 1.66 or more.

According to an embodiment, the third lens L3 is disposed third from the aperture Stop and may include an inflection point on each of an object-side surface S6 and an image sensor-side surface S7. The third lens L3 may have a positive refractive power, and may have a negative refractive power according to an embodiment. In an embodiment, the third lens L3 may have a shape convex toward the image sensor I, for example, may be a meniscus lens with a concave object-side surface S6 and a convex image sensor-side surface S7. Since the third lens L3 is implemented in a meniscus shape while having a positive refractive power, it may provide an environment where the effective diameters of lenses (e.g., the fourth lens L4 and/or the fifth lens L5) between the third lens L3 and the image sensor I may be reduced, and achieve good optical performance in a marginal region. In an embodiment, the third lens L3 may be a plastic aspherical lens having a refractive index of about 1.55 or less.

According to an embodiment, the fourth lens L4 is disposed fourth from the aperture Stop and may include an inflection point on each of an object-side surface S8 and an image sensor-side surface S9. The fourth lens L4 may have a negative refractive power, and according to an embodiment, may have a positive refractive power. In an embodiment, the fourth lens L4 may have a shape convex toward the object S, for example, may be a meniscus lens having a convex object-side surface S8 and a concave image sensor-side surface S9. In an embodiment, the fourth lens L4 may be a plastic aspherical lens having a refractive index of about 1.66 or more.

According to an embodiment, the fifth lens L5 is a lens disposed closest to the image sensor I, and may include an inflection point on each of an object-side surface S10 and an image sensor-side surface S11. The fifth lens L5 may have a positive refractive power, and may have a shape convex toward the object S, for example, may be a meniscus lens having a convex object-side surface S10 and a concave image sensor-side surface S11. In an embodiment, the fifth lens L5 may be a plastic aspherical lens having a refractive index of about 1.55 or more. In an embodiment, the IR cut filter F may be disposed between the fifth lens L5 and the image sensor I. The above refractive powers or lens shapes of the fourth lens L4 and the fifth lens L5 may facilitate, for example, optical performance control (e.g., astigmatism correction) in marginal region and suppress an increase in an angle of light incident on the imaging plane img from the marginal region.

According to an embodiment, the aperture Stop is disposed closer to the object S than the lenses L1, L2, L3, L4, and L5, and may substantially define an area where light is incident on the lens assembly 400. For example, the lenses L1, L2, L3, L4, and L5 may be disposed substantially between the aperture Stop and the image sensor I, and focus light incident through the aperture Stop and direct the light onto the image sensor I. In an embodiment, since the aperture Stop is disposed closer to the object S than the lenses L1, L2, L3, L4, and L5, it may be easy to secure wide-angle performance even if the effective diameters of the lenses L1, L2, L3, L4, and L5 (e.g., the first lens L1 disposed first from the object S or closest to the aperture) are reduced. For example, since the aperture Stop is disposed closer to the object S than the lenses L1, L2, L3, L4, and L5, the lens assembly 400 may be miniaturized and have improved wide-angle performance. The configuration of these lenses L1, L2, L3, L4, and L5 and the arrangement of the aperture Stop may enable the lens assembly 400 to be miniaturized and/or have a small diameter, and provide wide-angle performance suitable for a high-pixel sensor (e.g., the image sensor I or 230) with a maximum height of the imaging plane img of approximately 3.27mm. For example, the lens assembly 400 may achieve a field of view of approximately 100 degrees, while providing optical performance suitable for a high-performance image sensor of 50 million (M) pixels or more.

According to an embodiment, the lens assembly 400 may be miniaturized while easily providing wide-angle performance. In an embodiment, since the aperture Stop of the lens assembly 400 is disposed closer to the object S than the lenses L1, L2, L3, L4, and L5, the lens assembly 400 may provide wide-angle performance while having a small diameter. In an embodiment, in the electronic device (e.g., the electronic device 101, 102, 104, and 300 in FIGS. 1 to 4), a front camera (e.g., the first camera device 305 in FIG. 3) may be provided, which is disposed to receive light through at least a portion (e.g., an under display camera (UDC) area) of a screen area of a display (e.g., the display module 160 in FIG. 1 or the display 301 in FIG. 3), an area around the screen area, a notch area extending or protruding inwardly from the screen area, and/or a punch-hole area penetrating the screen area. Due to the arrangement of the front camera, the size (e.g., width) of the area around the screen area may increase or the screen area may be encroached upon. In an embodiment, as the lens assembly 400 has a small diameter and/or achieves improved wide-angle performance, when it is disposed as the front camera, it may contribute to miniaturization of the electronic device and/or suppress encroachment of the screen area. In an embodiment, when the front camera is implemented in the electronic device, the lens assembly 400 may provide an environment that may utilize a high-performance image sensor, while providing improved wide-angle performance.

According to an embodiment, the lens assembly 400 may satisfy a condition presented by the following [Equation 1].

$$[Equation\ 1]$$
$$0.55 \leq \frac{OAL}{2IH} \leq 0.7$$

In [Equation 1], "OAL" may be a distance from the object-side surface S2 of the first lens L1 to the imaging plane img, which may be a distance (hereinafter, "total lens length") measured on the optical axis O, and "IH" may be a maximum height of the imaging plane img among heights or distances measured from the optical axis O to an edge of the imaging plane img. When a value calculated by [Equation 1] is greater than 0.7, the total lens length may increase relative to the size of the image sensor I (e.g., the imaging plane img), thereby making it difficult to miniaturize the lens assembly 400. When the calculated value of [Equation 1] is less than 0.55, the lens assembly 400 may be miniaturized, but it may be difficult to secure the arrangement space of the lenses L1, L2, L3, L4, and L5 or correct aberrations. For example, the lens assembly 400 may be miniaturized to a degree where mass production is sufficiently considered, while having good optical performance (e.g., wide-angle performance) by satisfying the condition of [Equation 1].

According to an embodiment, the lens assembly 400 may satisfy a condition presented by the following [Equation 2].

$$[Equation\ 2]$$
$$-0.05 \leq \frac{T23-T12}{EFL} \leq 0.05$$

In [Equation 2], "T12" may be an air gap between the first lens L1 and the second lens L2, measured on the optical axis O, and "T23" may be an air gap between the second lens L2 and the third lens L3. In [Equation 2], "EFL" may be a total focal length of the lens assembly 400. When a calculated value of [Equation 2] is greater than 0.05, the gap between the second lens L2 and the third lens L3 may increase, making it difficult to control the aberration of marginal rays and hence to secure optical performance or a light quantity in the marginal region. When the calculated value of [Equation 2] is less than -0.05, it may be easy to secure optical performance in the marginal region, but a structure such as a spacer may be disposed between the first lens L1 and the second lens L2 in the structure where the lens assembly 400 has a small diameter. When the spacer is disposed, the flare phenomenon may increase, thereby deteriorating the quality of a captured image. For example, since the lens assembly 400 may secure good optical performance in the marginal region and exclude the spacer by satisfying the condition of [Equation 2], manufacturing cost may be reduced or the flare phenomenon may be improved.

According to an embodiment, the lens assembly 400 may satisfy a condition presented by the following [Equation 3].

$$[Equation\ 3]$$
$$90 \leq FOV \leq 110$$

In [Equation 3], "FOV" is a field of view of the lens assembly 400, and when the condition of [Equation 3] is satisfied, the lens assembly 400 may secure the optical performance or light quantity required for the marginal region, and may be implemented as a small-diameter bright lens. For example, when the field of view, FOV is larger than about 110 degrees, the lens assembly 400 may have difficulty in securing the optical performance or light quantity in the marginal region, and when the field of view is smaller than about 90 degrees, the focal length may increase, thereby making it difficult to implement a bright lens with an F-number of 2.2 or less in the structure where the lens assembly 400 has a small diameter.

According to an embodiment, the lens assembly 400 may satisfy a condition presented by the following [Equation 4].

[Equation 4]

$$0.05 \leq \frac{Y22 - Y11}{EFL} \leq 0.16$$

Herein, "Y11" may be an effective radius of the object-side surface S2 of the first lens L1, and "Y22" may be an effective radius of the image sensor-side surface S5 of the second lens L2. As mentioned above, "EFL" may be the total focal length of the lens assembly 400. When a calculated value of [Equation 4] is greater than 0.16, it may be advantageous to secure the optical performance in the marginal region. However, when the lens assembly 400 is implemented as a small-diameter structure, the use of a spacer between the first lens L1 and the second lens L2 is inevitable. When the calculated value of [Equation 4] is less than 0.05, the lens assembly 400 may be miniaturized and/or have a small diameter, but it may be difficult to secure the optical performance or light quantity in the marginal region. For example, when the condition of [Equation 4] is satisfied, the lens assembly 400 may be miniaturized and/or have a small diameter, while securing a good optical performance and light quantity in the marginal region.

According to an embodiment, the lens assembly 400 may be miniaturized while securing good optical performance, and the manufacturing cost of the lens assembly 400 may be reduced, by satisfying a condition of the following [Equation 5] for an Abbe number 'Vd1' of the first lens L1 and an Abbe number 'Vd2' of the second lens L2.

[Equation 5]

$$20 \leq Vd1 - Vd2 \leq 45$$

In an embodiment, when a calculated value of [Equation 5] is greater than 45, it may be easy to secure the optical performance. However, the use of a plastic material may be limited in manufacturing the lenses L1, L2, L3, L4, and L5 (e.g., the first lens L1 and the second lens L2), thereby increasing the manufacturing cost. When the calculated value of [Equation 5] is less than 20, the difference in refractive index between the first lens L1 and the second lens L2 decreases, which may make miniaturization or aberration correction difficult.

According to an embodiment, the lens assembly 400 may satisfy a condition presented by the following [Equation 6].

[Equation 6]

$$0.95 \leq \frac{OAL}{Tsi} \leq 1.05$$

In [Equation 6], "OAL" is the total lens length as mentioned above, and "Tsi" may be a distance from the aperture Stop to the imaging plane img, measured on the optical axis O. In an embodiment, when a calculated value of [Equation 6] is greater than 1.05, the aperture Stop may be disposed closer to the image sensor I than the first lens L1. For example, when the calculated value of [Equation 6] is greater than 1.05, the effective diameter of the first lens L1 should be large to secure wide-angle performance, and thus it may be difficult to reduce the diameter of the lens assembly 400. When the calculated value of [Equation 6] is less than 0.95, the aperture Stop is disposed closer to the object S than the first lens L1, but is farther away from the first lens L1. The resulting substantial increase in the length of the lens assembly 400 or the camera in the direction of the optical axis O may make the miniaturization difficult. In an embodiment, when the calculated value of [Equation 6] is less than 0.95, the lens assembly 400 may have poor performance in securing the light quantity in the marginal region. For example, the lens assembly 400 may be reduced in size and/or have a small diameter while providing good performance in terms of the light quantity in the marginal region by satisfying the condition of [Equation 6].

According to an embodiment, the lens assembly 400 may satisfy a condition presented by the following [Equation 7].

[Equation 7]

$$0.25 \leq \frac{BFL}{IH} \leq 0.45$$

In [Equation 7], "BFL" is a distance between the image sensor-side surface S11 of the lens (e.g., the fifth lens L5) closest to the image sensor I and the imaging plane img, which is measured on the optical axis O, and "IH" is the maximum height of the imaging plane img, as mentioned above. When the condition of [Equation 7] is satisfied, the lens assembly 400 may be miniaturized within a range where mass production is ensured. For example, when a calculated value of [Equation 7] is less than 0.25, it may be difficult to secure an arrangement space for the IR cut filter F or a movement space for the lens(es) L1, L2, L3, L4, and L5 for focusing adjustment. In an embodiment, when the calculated value of [Equation 7] is greater than 0.45, the arrangement space and/or the movement space may be easy to secure, but it may be difficult to miniaturize the lens assembly 400 and to secure a field of view of about 100 degrees.

According to an embodiment, the lens assembly 400 may provide excellent wide-angle performance with a field of view of about 100 degrees, when combined with a high-pixel image sensor having a maximum height of the imaging plane img of about 3.27mm. In an embodiment, the aperture Stop may be disposed closer to the object S than the lenses L1, L2, L3, L4, and L5, so that it may be easy to reduce the effective diameter of the first lens L1 or the second lens L2. For example, since the aperture Stop is disposed closer to the object S than the lenses L1, L2, L3, L4, and L5, and thus the lens assembly 400 has a small diameter, the screen area encroachment may be suppressed even if it is disposed to face substantially the same direction as the display (e.g., the display module 160 in FIG. 1 or the display 301 in FIG. 3). In an embodiment, the gap between the first lens L1 and the second lens L2 is substantially equal to the gap between the second lens L2 and the third lens L3, which may facilitate fixing or assembly of the lenses without using a spacer between the first lens L1 and the second lens L2 and/or between the second lens L2 and the third lens L3. For example, the flare phenomenon caused by the spacer may be suppressed, and the manufacturing cost may be reduced by excluding the spacer.

According to an embodiment, the lens assembly 400 may have a focal length of approximately 2.733mm, an F-number of approximately 2.27, a maximum height (e.g., image height) of the imaging plane img of approximately 3.27mm, and/or a field of view of approximately 99.5 degrees. In an embodiment, the effective radius "Y11" of the object-side surface S2 of the first lens L1 may be approximately 0.602mm, and the effective radius "Y22" of the image sensor-side surface S5 of the second lens L2 may be approximately 0.98mm. The lens assembly 400 may satisfy at least some of the afore-described shapes and refractive powers of the lens(es) (e.g., lens surface(s)) and/or the conditions presented by [Equations], and may be manufactured with exemplary specifications described in [Table 1] below.

[Table 1]

| Surface | Surface type | y radius | Thickness | Refractive index (Nd) | Abbe number (Vd) |
|---|---|---|---|---|---|
| S0 | Sphere | infinity | 400 | | |
| Stop | Sphere | infinity | -0.06 | | |
| S2 | Odd Polynomial | 2.168 | 0.588 | 1.54401 | 55.91 |
| S3 | Odd Polynomial | 15.155 | 0.263 | | |
| S4 | Odd Polynomial | -39.364 | 0.332 | 1.67074 | 19.23 |
| S5 | Odd Polynomial | 15.480 | 0.282 | | |
| S6 | Odd Polynomial | -7.865 | 0.614 | 1.54401 | 55.91 |
| S7 | Odd Polynomial | -2.040 | 0.02 | | |
| S8 | Odd Polynomial | 17.792 | 0.32 | 1.67074 | 19.23 |
| S9 | Odd Polynomial | 4.122 | 0.127 | | |
| S10 | Odd Polynomial | 0.732 | 0.517 | 1.54401 | 55.91 |
| S11 | Odd Polynomial | 0.655 | 0.408 | | |
| S12 | Sphere | infinity | 0.11 | 1.5168 | 64.2 |
| S13 | Sphere | infinity | 0.585 | | |
| img | Sphere | infinity | 0.03 | | |

[Table 2], [Table 3], and [Table 4] below list the aspherical coefficients of the lenses L1, L2, L3, L4, and L5, and an aspherical surface may be defined by the following [Equation 8].

[Equation 8]

$$x = \frac{y^2/R}{1 + \sqrt{(1-(1+K)(y/R^2))}} + \sum_i (A_i)(y^i)$$

In [Equation 8], "x" is a distance from a point where the optical axis O passes on a lens surface in the direction of the optical axis O, "y" is a distance from the optical axis O in a direction perpendicular to the optical axis O, "R" is a radius of curvature at the point where the optical axis O passes on the lens surface, "K" is a conic constant, and "Ai" is an aspherical coefficient.

[Table 2]

|  | S2 | S3 | S4 |
|---|---|---|---|
| K | 8.101859E-02 | 9.874129E+01 | 9.821224E+01 |
| A4 | -2.418719E-01 | -2.978171E-01 | -5.276896E-01 |
| A6 | 1.425027E+01 | 4.071002E+00 | 5.649981E+00 |
| A8 | -4.727510E+02 | -7.472119E+01 | -8.695146E+01 |
| A10 | 9.118702E+03 | 8.737224E+02 | 8.600692E+02 |
| A12 | -1.128809E+05 | -7.007610E+03 | -5.869628E+03 |
| A14 | 9.481317E+05 | 3.961610E+04 | 2.827116E+04 |
| A16 | -5.582765E+06 | -1.607096E+05 | -9.770638E+04 |
| A18 | 2.343930E+07 | 4.716619E+05 | 2.442967E+05 |
| A20 | -7.047034E+07 | -9.997136E+05 | -4.414340E+05 |
| A22 | 1.504170E+08 | 1.510575E+06 | 5.696420E+05 |
| A24 | -2.223050E+08 | -1.581881E+06 | -5.108510E+05 |
| A26 | 2.160717E+08 | 1.088024E+06 | 3.018932E+05 |
| A28 | -1.241226E+08 | -4.411123E+05 | -1.055189E+05 |
| A30 | 3.190311E+07 | 7.975172E+04 | 1.649848E+04 |

[Table 3]

|  | S5 | S6 | S7 |
|---|---|---|---|
| K | -3.636884E+01 | -9.893801E+01 | -2.797940E+00 |
| A4 | -3.058992E-01 | -4.763008E-01 | -9.252677E-01 |
| A6 | 8.319623E-01 | 2.168400E+00 | 3.626371E+00 |
| A8 | 1.567458E+00 | -6.430655E+00 | -9.543445E+00 |
| A10 | -4.817321E+01 | 1.871603E+01 | 1.561214E+01 |
| A12 | 3.279213E+02 | -4.977680E+01 | -8.751889E+00 |
| A14 | -1.313980E+03 | 1.033700E+02 | -2.378590E+01 |
| A16 | 3.541838E+03 | -1.571360E+02 | 7.047274E+01 |
| A18 | -6.706766E+03 | 1.721897E+02 | -9.675566E+01 |
| A20 | 9.041154E+03 | -1.352185E+02 | 8.353876E+01 |
| A22 | -8.630122E+03 | 7.522095E+01 | -4.821710E+01 |
| A24 | 5.694178E+03 | -2.889309E+01 | 1.863594E+01 |
| A26 | -2.466652E+03 | 7.279318E+00 | -4.641570E+00 |
| A28 | 6.302506E+02 | -1.081278E+00 | 6.745974E-01 |
| A30 | -7.187925E+01 | 7.170027E-02 | -4.352782E-02 |

[Table 4]

|     | S8 | S9 | S10 | S11 |
|-----|-----|-----|-----|-----|
| K | 9.900000E+01 | -5.727824E+01 | -3.694576E+00 | -2.706320E+00 |
| A4 | 3.561564E-01 | 4.900055E-01 | -3.042158E-01 | -3.199156E-01 |
| A6 | -5.275694E-01 | -1.074439E+00 | 2.688712E-01 | 4.029754E-01 |
| A8 | 4.108198E-01 | 1.655024E+00 | -2.622043E-01 | -4.285724E-01 |
| A10 | -5.610561E-01 | -2.076525E+00 | 2.104067E-01 | 3.449319E-01 |
| A12 | 1.530490E+00 | 1.983853E+00 | -1.232712E-01 | -2.057338E-01 |
| A14 | -3.121703E+00 | -1.404528E+00 | 5.431360E-02 | 9.133485E-02 |
| A16 | 4.035334E+00 | 7.344241E-01 | -1.848759E-02 | -3.025043E-02 |
| A18 | -3.417629E+00 | -2.833037E-01 | 4.851694E-03 | 7.443306E-03 |
| A20 | 1.944943E+00 | 8.009603E-02 | -9.607618E-04 | -1.346373E-03 |
| A22 | -7.458256E-01 | -1.633914E-02 | 1.392321E-04 | 1.757662E-04 |
| A24 | 1.885820E-01 | 2.334368E-03 | -1.419195E-05 | -1.605200E-05 |
| A26 | -2.972846E-02 | -2.211293E-04 | 9.584118E-07 | 9.704310E-07 |
| A28 | 2.584615E-03 | 1.245338E-05 | -3.837555E-08 | -3.482628E-08 |
| A30 | -9.013028E-05 | -3.151588E-07 | 6.884321E-10 | 5.609765E-10 |

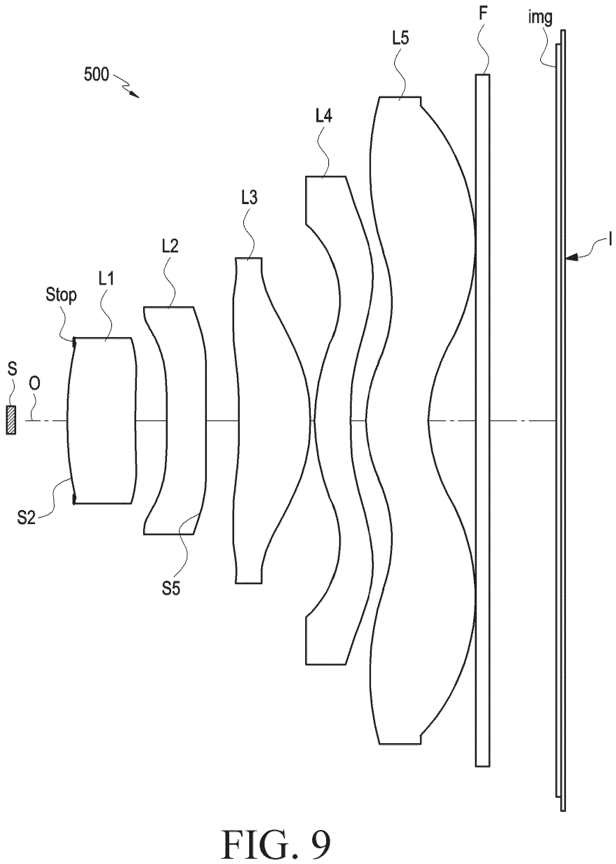

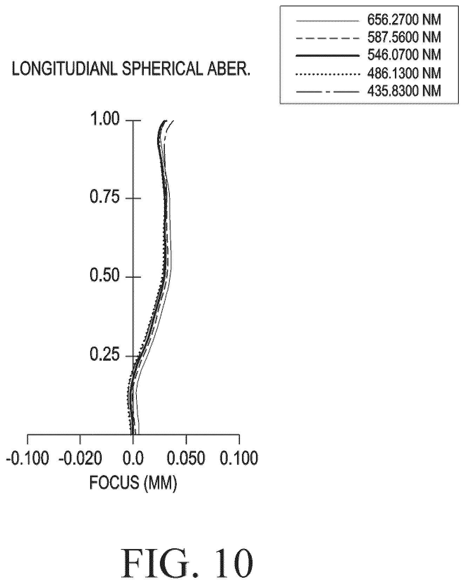

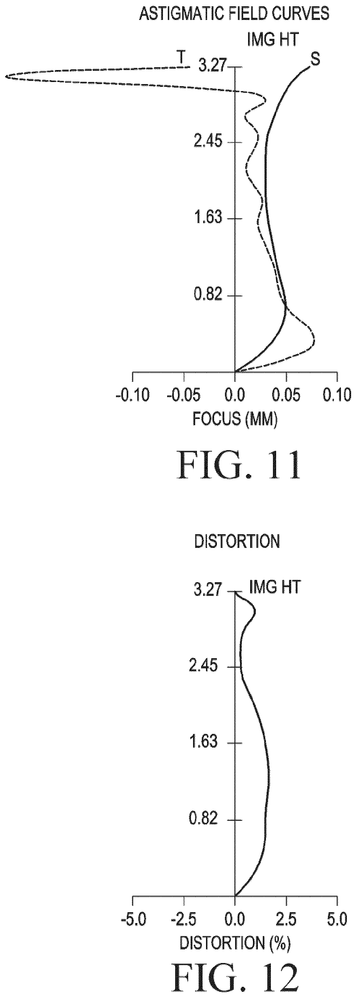

FIG. 9 is a diagram illustrating a lens assembly 500 according to an embodiment of the disclosure. FIG. 10 is a graph illustrating spherical aberration of the lens assembly 500 of FIG. 9 according to an embodiment of the disclosure. FIG. 11 is a graph illustrating astigmatism of the lens assembly 500 of FIG. 9 according to an embodiment of the disclosure. FIG. 12 is a graph illustrating distortion rates of the lens assembly 500 of FIG. 9 according to an embodiment of the disclosure.

The lens assembly 500 of FIG. 9 may have a focal length of approximately 2.733mm, an F-number of approximately 2.27, a maximum height of the imaging plane img of approximately 3.27mm, and/or a field of view of approximately 99.5 degrees. In an embodiment, the effective radius "Y11" of the object-side surface S2 of the first lens L1 may be approximately 0.602mm, and the effective radius "Y22" of the image sensor-side surface S5 of the second lens L2 may be approximately 1.004mm. The lens assembly 500 may satisfy at least some of the afore-described shapes and refractive powers of the lens(es) (e.g., lens surface(s)) and/or the conditions presented by [Equations], be manufactured with exemplary specifications described in [Table 5] below, and have aspherical coefficients listed in [Table 6], [Table 7], and [Table 8].

[Table 5]

| Surface | Surface type | y radius | Thickness | Refractive index (Nd) | Abbe number (Vd) |
|---------|--------------|----------|-----------|----------------------|------------------|
| S0 | Sphere | infinity | 400 | | |
| Stop | Sphere | infinity | -0.06 | | |
| S2 | Odd Polynomial | 2.094 | 0.588 | 1.54401 | 55.91 |
| S3 | Odd Polynomial | 18.550 | 0.263 | | |
| S4 | Odd Polynomial | -43.716 | 0.332 | 1.67074 | 19.23 |
| S5 | Odd Polynomial | 7.550 | 0.282 | | |
| S6 | Odd Polynomial | -11.425 | 0.614 | 1.54401 | 55.91 |
| S7 | Odd Polynomial | -2.409 | 0.02 | | |
| S8 | Odd Polynomial | 17.502 | 0.32 | 1.67074 | 19.23 |
| S9 | Odd Polynomial | 3.799 | 0.127 | | |
| S10 | Odd Polynomial | 0.682 | 0.517 | 1.54401 | 55.91 |

(continued)

| Surface | Surface type | y radius | Thickness | Refractive index (Nd) | Abbe number (Vd) |
|---------|--------------|----------|-----------|-----------------------|------------------|
| S11 | Odd Polynomial | 0.650 | 0.408 | | |
| S12 | Sphere | infinity | 0.11 | 1.5168 | 64.2 |
| S13 | Sphere | infinity | 0.585 | | |
| img | Sphere | infinity | 0.03 | | |

[Table 6]

| | S2 | S3 | S4 |
|---|------|------|------|
| K | -1.747416E-01 | -3.557409E+01 | -4.064551E+01 |
| A4 | 4.966449E-02 | -2.129686E-01 | -3.457166E-01 |
| A6 | -5.901888E+00 | 1.294894E+00 | 1.665303E-01 |
| A8 | 1.900066E+02 | -1.629473E+01 | 3.218693E+00 |
| A10 | -3.588161E+03 | 1.048378E+02 | -6.691870E+01 |
| A12 | 4.357366E+04 | -2.872207E+02 | 5.550994E+02 |
| A14 | -3.602735E+05 | -8.242359E+02 | -2.823168E+03 |
| A16 | 2.095319E+06 | 1.088807E+04 | 9.741040E+03 |
| A18 | -8.717106E+06 | -4.836625E+04 | -2.369575E+04 |
| A20 | 2.604729E+07 | 1.278464E+05 | 4.118181E+04 |
| A22 | -5.541105E+07 | -2.208498E+05 | -5.083826E+04 |
| A24 | 8.183162E+07 | 2.524675E+05 | 4.349011E+04 |
| A26 | -7.966982E+07 | -1.847235E+05 | -2.448713E+04 |
| A28 | 4.594735E+07 | 7.853071E+04 | 8.158533E+03 |
| A30 | -1.188249E+07 | -1.477388E+04 | -1.218569E+03 |

[Table 7]

| | S5 | S6 | S7 |
|---|------|------|------|
| K | 2.756975E+01 | -9.900000E+01 | -1.058324E+00 |
| A4 | -3.823414E-01 | -4.582648E-01 | -9.085289E-01 |
| A6 | 2.014741E+00 | 3.282690E+00 | 4.087333E+00 |
| A8 | -1.299543E+01 | -1.506226E+01 | -1.351795E+01 |
| A10 | 6.141150E+01 | 5.331297E+01 | 3.315567E+01 |
| A12 | -2.144522E+02 | -1.436884E+02 | -5.954631E+01 |
| A14 | 5.447135E+02 | 2.884691E+02 | 7.835354E+01 |
| A16 | -9.904207E+02 | -4.277586E+02 | -7.576992E+01 |
| A18 | 1.263590E+03 | 4.668680E+02 | 5.388648E+01 |
| A20 | -1.087618E+03 | -3.726095E+02 | -2.800589E+01 |
| A22 | 5.751849E+02 | 2.142638E+02 | 1.044772E+01 |
| A24 | -1.316564E+02 | -8.624128E+01 | -2.699824E+00 |
| A26 | -3.164328E+01 | 2.301592E+01 | 4.525592E-01 |
| A28 | 2.702329E+01 | -3.653023E+00 | -4.326541E-02 |

(continued)

|  | S5 | S6 | S7 |
|---|---|---|---|
| A30 | -4.903765E+00 | 2.606582E-01 | 1.714288E-03 |

[Table 8]

|  | S8 | S9 | S10 | S11 |
|---|---|---|---|---|
| K | 8.997691E+01 | -1.497668E+01 | -3.793977E+00 | -2.661244E+00 |
| A4 | 5.741604E-01 | 4.862719E-01 | -3.174671E-01 | -3.344795E-01 |
| A6 | -1.271530E+00 | -1.158818E+00 | 2.844974E-01 | 4.384829E-01 |
| A8 | 1.991015E+00 | 2.006660E+00 | -2.755297E-01 | -4.695438E-01 |
| A10 | -2.415101E+00 | -2.727553E+00 | 2.222978E-01 | 3.678177E-01 |
| A12 | 2.077785E+00 | 2.685658E+00 | -1.323870E-01 | -2.067933E-01 |
| A14 | -1.247679E+00 | -1.895941E+00 | 5.954030E-02 | 8.459837E-02 |
| A16 | 5.275164E-01 | 9.707088E-01 | -2.066646E-02 | -2.557636E-02 |
| A18 | -1.585518E-01 | -3.635777E-01 | 5.509551E-03 | 5.759619E-03 |
| A20 | 3.397061E-02 | 9.956011E-02 | -1.103781E-03 | -9.637842E-04 |
| A22 | -5.147054E-03 | -1.968659E-02 | 1.613125E-04 | 1.180994E-04 |
| A24 | 5.385525E-04 | 2.732683E-03 | -1.654790E-05 | -1.027703E-05 |
| A26 | -3.701193E-05 | -2.522288E-04 | 1.123373E-06 | 6.001132E-07 |
| A28 | 1.503274E-06 | 1.388085E-05 | -4.519222E-08 | -2.103899E-08 |
| A30 | -2.734462E-08 | -3.441723E-07 | 8.144252E-10 | 3.340348E-10 |

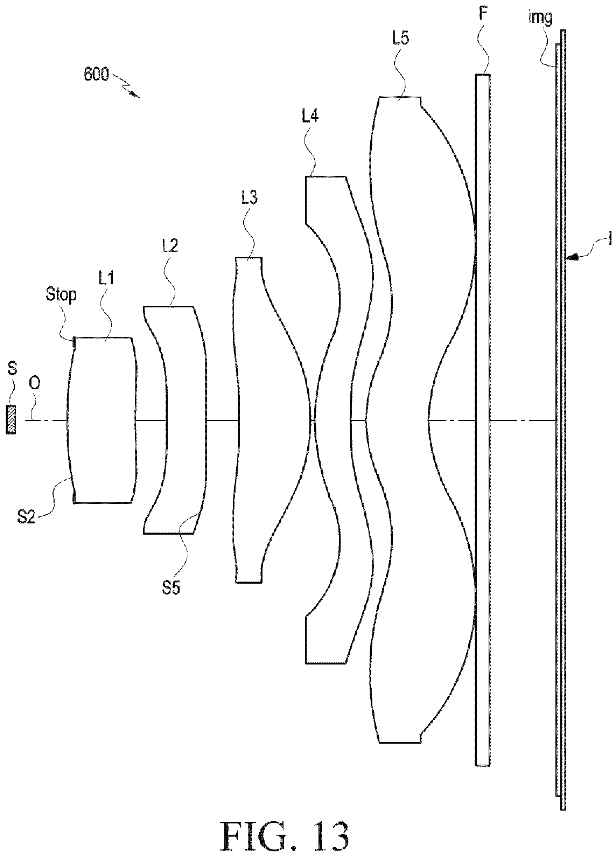

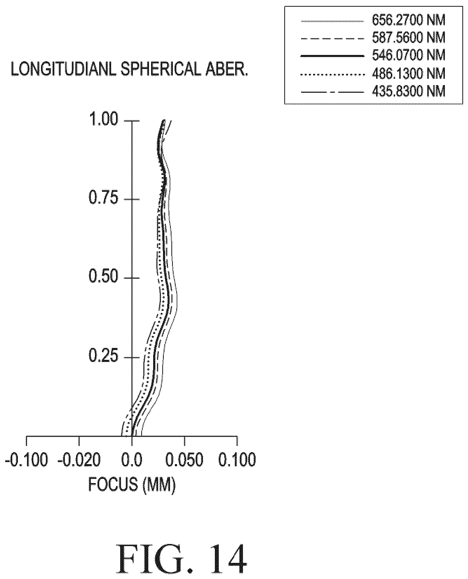

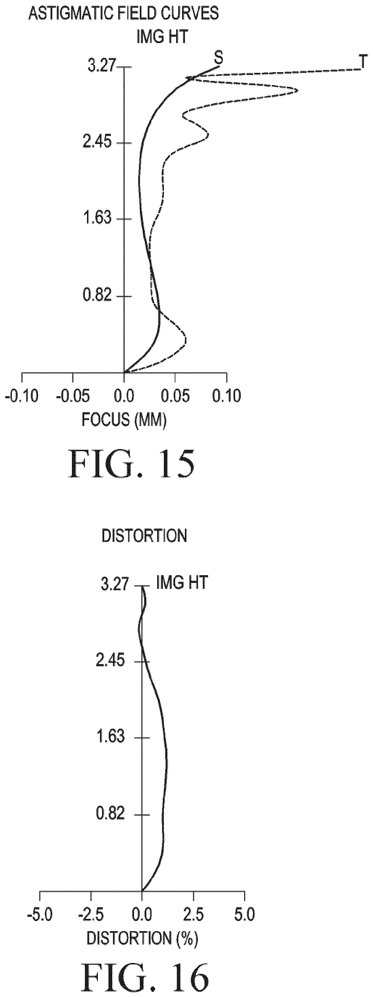

FIG. 13 is a diagram illustrating a lens assembly 600 according to an embodiment of the disclosure. FIG. 14 is a graph illustrating spherical aberration of the lens assembly 600 of FIG. 13 according to an embodiment of the disclosure. FIG. 15 is a graph illustrating astigmatism of the lens assembly 600 of FIG. 13 according to an embodiment of the disclosure. FIG. 16 is a graph illustrating distortion rates of the lens assembly 600 of FIG. 13 according to an embodiment of the disclosure.

The lens assembly 600 of FIG. 13 may have a focal length of approximately 2.733mm, an F-number of approximately 2.27, a maximum height of the imaging plane img of approximately 3.27mm, and/or a field of view of approximately 99.5 degrees. In an embodiment, the effective radius "Y11" of the object-side surface S2 of the first lens L1 may be approximately 0.602mm, and the effective radius "Y22" of the image sensor-side surface S5 of the second lens L2 may be approximately 0.992mm. The lens assembly 600 may satisfy at least some of the afore-described shapes and refractive powers of the lens(es) (e.g., lens surface(s)) and/or the conditions presented by [Equations], be manufactured with exemplary specifications described in [Table 9] below, and have aspherical coefficients listed in [Table 10], [Table 11], and [Table 12].

[Table 9]

| Surface | Surface type | y radius | Thickness | Refractive index (Nd) | Abbe number (Vd) |
|---|---|---|---|---|---|
| S0 | Sphere | infinity | 400 |  |  |
| Stop | Sphere | infinity | -0.06 |  |  |
| S2 | Odd Polynomial | 2.140 | 0.584 | 1.54401 | 55.91 |
| S3 | Odd Polynomial | 13.190 | 0.260 |  |  |
| S4 | Odd Polynomial | -58.641 | 0.337 | 1.67074 | 19.23 |
| S5 | Odd Polynomial | 11.523 | 0.274 |  |  |
| S6 | Odd Polynomial | -11.484 | 0.661 | 1.54401 | 55.91 |
| S7 | Odd Polynomial | -2.208 | 0.036 |  |  |

(continued)

| Surface | Surface type | y radius | Thickness | Refractive index (Nd) | Abbe number (Vd) |
|---|---|---|---|---|---|
| S8 | Odd Polynomial | 17.474 | 0.240 | 1.67074 | 19.23 |
| S9 | Odd Polynomial | 4.210 | 0.138 | | |
| S10 | Odd Polynomial | 0.728 | 0.532 | 1.54401 | 55.91 |
| S11 | Odd Polynomial | 0.654 | 0.408 | | |
| S12 | Sphere | infinity | 0.11 | 1.5168 | 64.2 |
| S13 | Sphere | infinity | 0.585 | | |
| img | Sphere | infinity | 0.03 | | |

[Table 10]

| | S2 | S3 | S4 |
|---|---|---|---|
| K | 1.807000E-01 | 8.890209E+01 | -8.419465E+01 |
| A4 | -2.476886E-01 | -2.182511E-01 | -3.983246E-01 |
| A6 | 1.442366E+01 | 1.681465E+00 | 1.874938E+00 |
| A8 | -4.684587E+02 | -3.037755E+01 | -2.038721E+01 |
| A10 | 8.890185E+03 | 3.543730E+02 | 1.425907E+02 |
| A12 | -1.088605E+05 | -2.946907E+03 | -7.416133E+02 |
| A14 | 9.086523E+05 | 1.764852E+04 | 2.895411E+03 |
| A16 | -5.336795E+06 | -7.660812E+04 | -8.499819E+03 |
| A18 | 2.241676E+07 | 2.411893E+05 | 1.870584E+04 |
| A20 | -6.758842E+07 | -5.473413E+05 | -3.061709E+04 |
| A22 | 1.449606E+08 | 8.818188E+05 | 3.677328E+04 |
| A24 | -2.156225E+08 | -9.797487E+05 | -3.152084E+04 |
| A26 | 2.112155E+08 | 7.114294E+05 | 1.822446E+04 |
| A28 | -1.224221E+08 | -3.031230E+05 | -6.340553E+03 |
| A30 | 3.177914E+07 | 5.736614E+04 | 9.970717E+02 |

[Table 11]

| | S5 | S6 | S7 |
|---|---|---|---|
| K | 3.863003E+01 | -4.794183E+01 | -1.878940E+00 |
| A4 | -3.081056E-01 | -4.482934E-01 | -8.869100E-01 |
| A6 | 1.205806E+00 | 2.370915E+00 | 3.318623E+00 |
| A8 | -5.961763E+00 | -9.821118E+00 | -8.366050E+00 |
| A10 | 2.387448E+01 | 3.770134E+01 | 1.171220E+01 |
| A12 | -8.406893E+01 | -1.137396E+02 | 2.310692E+00 |
| A14 | 2.410532E+02 | 2.492220E+02 | -4.719517E+01 |
| A16 | -5.203182E+02 | -3.921578E+02 | 1.054992E+02 |
| A18 | 8.115788E+02 | 4.447894E+02 | -1.338310E+02 |
| A20 | -8.914422E+02 | -3.636506E+02 | 1.116078E+02 |
| A22 | 6.695768E+02 | 2.121531E+02 | -6.344569E+01 |
| A24 | -3.270904E+02 | -8.607504E+01 | 2.445277E+01 |

(continued)

|  | S5 | S6 | S7 |
|---|---|---|---|
| A26 | 9.402946E+01 | 2.305679E+01 | -6.130792E+00 |
| A28 | -1.242377E+01 | -3.663026E+00 | 9.038442E-01 |
| A30 | 1.680075E-01 | 2.611816E-01 | -5.952568E-02 |

[Table 12]

|  | S8 | S9 | S10 | S11 |
|---|---|---|---|---|
| K | 8.984051E+01 | -5.122264E+00 | -3.675093E+00 | -2.713206E+00 |
| A4 | 6.130551E-01 | 6.588498E-01 | -3.008971E-01 | -3.218747E-01 |
| A6 | -1.428977E+00 | -1.668821E+00 | 2.640165E-01 | 4.061902E-01 |
| A8 | 2.300634E+00 | 2.773013E+00 | -2.550812E-01 | -4.254894E-01 |
| A10 | -2.777155E+00 | -3.431108E+00 | 2.035339E-01 | 3.331880E-01 |
| A12 | 2.354028E+00 | 3.088318E+00 | -1.189940E-01 | -1.923642E-01 |
| A14 | -1.392800E+00 | -2.020929E+00 | 5.243825E-02 | 8.269734E-02 |
| A16 | 5.816998E-01 | 9.691583E-01 | -1.786634E-02 | -2.662041E-02 |
| A18 | -1.731690E-01 | -3.420765E-01 | 4.690642E-03 | 6.395943E-03 |
| A20 | 3.683058E-02 | 8.854114E-02 | -9.281790E-04 | -1.134356E-03 |
| A22 | -5.549203E-03 | -1.656876E-02 | 1.342525E-04 | 1.456182E-04 |
| A24 | 5.781628E-04 | 2.177095E-03 | -1.364580E-05 | -1.309693E-05 |
| A26 | -3.960596E-05 | -1.901754E-04 | 9.183736E-07 | 7.800290E-07 |
| A28 | 1.604714E-06 | 9.899918E-06 | -3.663312E-08 | -2.756057E-08 |
| A30 | -2.913668E-08 | -2.320150E-07 | 6.545589E-10 | 4.364824E-10 |

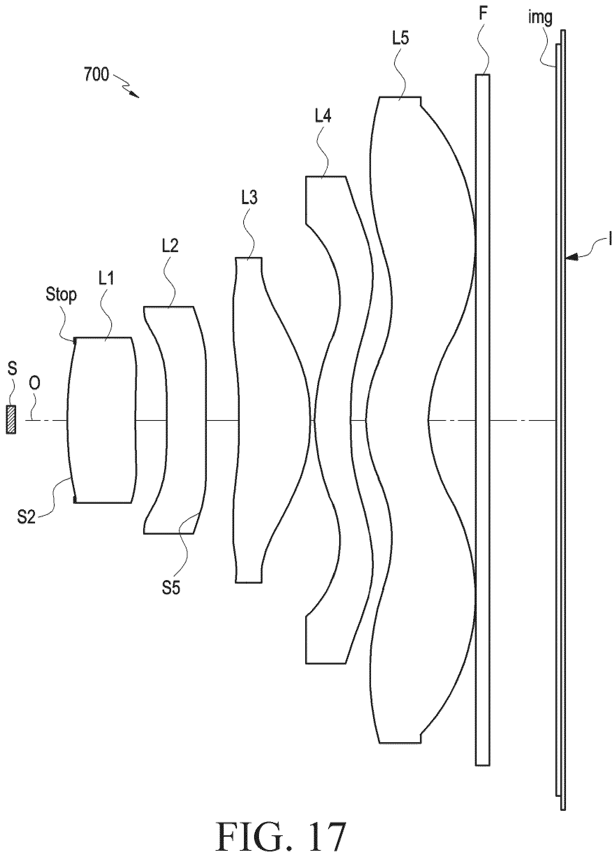

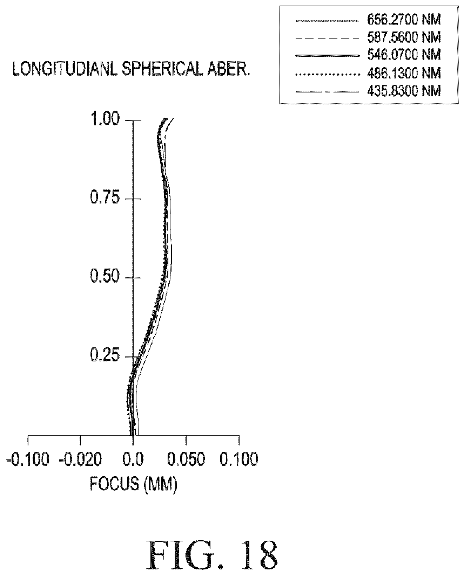

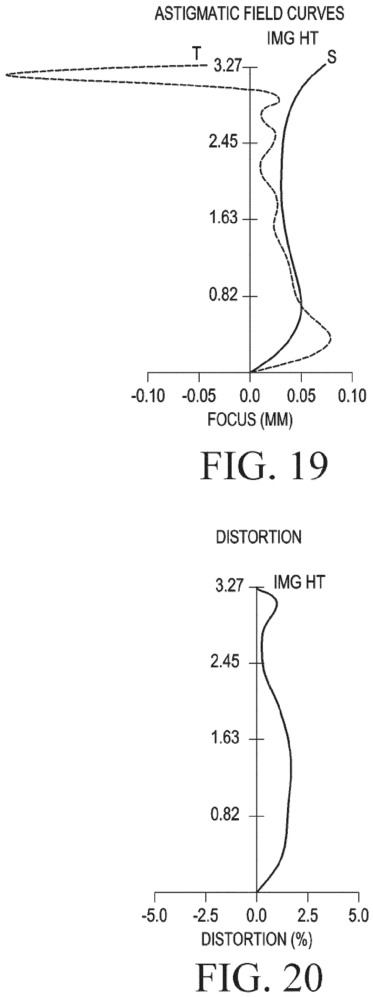

FIG. 17 is a diagram illustrating a lens assembly 700 according to an embodiment of the disclosure. FIG. 18 is a graph illustrating spherical aberration of the lens assembly 700 of FIG. 17 according to an embodiment of the disclosure. FIG. 19 is a graph illustrating ⊢ astigmatism of the lens assembly 700 of FIG. 17 according to an embodiment of the disclosure. FIG. 20 is a graph illustrating distortion rates of the lens assembly 700 of FIG. 17 according to an embodiment of the disclosure.

The lens assembly 700 of FIG. 17 may have a focal length of approximately 2.733mm, an F-number of approximately 2.27, a maximum height of the imaging plane img of approximately 3.27mm, and/or a field of view of approximately 99.5 degrees. In an embodiment, the effective radius "Y11" of the object-side surface S2 of the first lens L1 may be approximately 0.602mm, and the effective radius "Y22" of the image sensor-side surface S5 of the second lens L2 may be approximately 1.004mm. The lens assembly 700 may satisfy at least some of the afore-described shapes and refractive powers of the lens(es) (e.g., lens surface(s)) and/or the conditions presented by [Equations], be manufactured with exemplary specifications described in [Table 13] below, and have aspherical coefficients listed in [Table 14, [Table 15], and [Table 16].

[Table 13]

| Surface | Surface type | y radius | Thickness | Refractive index (Nd) | Abbe number (Vd) |
|---|---|---|---|---|---|
| S0 | Sphere | infinity | 400 |  |  |
| Stop | Sphere | infinity | -0.06 |  |  |
| S2 | Odd Polynomial | 2.094 | 0.503 | 1.54401 | 55.91 |
| S3 | Odd Polynomial | 18.550 | 0.334 |  |  |
| S4 | Odd Polynomial | -43.716 | 0.333 | 1.67074 | 19.23 |
| S5 | Odd Polynomial | 7.550 | 0.204 |  |  |

(continued)

| Surface | Surface type | y radius | Thickness | Refractive index (Nd) | Abbe number (Vd) |
|---|---|---|---|---|---|
| S6 | Odd Polynomial | -11.425 | 0.752 | 1.54401 | 55.91 |
| S7 | Odd Polynomial | -2.409 | 0.044 | | |
| S8 | Odd Polynomial | 17.502 | 0.25 | 1.67074 | 19.23 |
| S9 | Odd Polynomial | 3.799 | 0.085 | | |
| S10 | Odd Polynomial | 0.682 | 0.549 | 1.54401 | 55.91 |
| S11 | Odd Polynomial | 0.650 | 0.4241 | | |
| S12 | Sphere | infinity | 0.11 | 1.5168 | 64.2 |
| S13 | Sphere | infinity | 0.585 | | |
| img | Sphere | infinity | 0.03 | | |

[Table 14]

| | S2 | S3 | S4 |
|---|---|---|---|
| K | -1.747416E-01 | -3.557409E+01 | -4.064551E+01 |
| A4 | 4.966449E-02 | -2.129686E-01 | -3.457166E-01 |
| A6 | -5.901888E+00 | 1.294894E+00 | 1.665303E-01 |
| A8 | 1.900066E+02 | -1.629473E+01 | 3.218693E+00 |
| A10 | -3.588161E+03 | 1.048378E+02 | -6.691870E+01 |
| A12 | 4.357366E+04 | -2.872207E+02 | 5.550994E+02 |
| A14 | -3.602735E+05 | -8.242359E+02 | -2.823168E+03 |
| A16 | 2.095319E+06 | 1.088807E+04 | 9.741040E+03 |
| A18 | -8.717106E+06 | -4.836625E+04 | -2.369575E+04 |
| A20 | 2.604729E+07 | 1.278464E+05 | 4.118181E+04 |
| A22 | -5.541105E+07 | -2.208498E+05 | -5.083826E+04 |
| A24 | 8.183162E+07 | 2.524675E+05 | 4.349011E+04 |
| A26 | -7.966982E+07 | -1.847235E+05 | -2.448713E+04 |
| A28 | 4.594735E+07 | 7.853071E+04 | 8.158533E+03 |
| A30 | -1.188249E+07 | -1.477388E+04 | -1.218569E+03 |

[Table 15]

| | S5 | S6 | S7 |
|---|---|---|---|
| K | 2.756975E+01 | -9.900000E+01 | -1.058324E+00 |
| A4 | -3.823414E-01 | -4.582648E-01 | -9.085289E-01 |
| A6 | 2.014741E+00 | 3.282690E+00 | 4.087333E+00 |
| A8 | -1.299543E+01 | -1.506226E+01 | -1.351795E+01 |
| A10 | 6.141150E+01 | 5.331297E+01 | 3.315567E+01 |
| A12 | -2.144522E+02 | -1.436884E+02 | -5.954631E+01 |
| A14 | 5.447135E+02 | 2.884691E+02 | 7.835354E+01 |
| A16 | -9.904207E+02 | -4.277586E+02 | -7.576992E+01 |
| A18 | 1.263590E+03 | 4.668680E+02 | 5.388647E+01 |
| A20 | -1.087618E+03 | -3.726095E+02 | -2.800589E+01 |

(continued)

|  | S5 | S6 | S7 |
|---|---|---|---|
| A22 | 5.751849E+02 | 2.142638E+02 | 1.044772E+01 |
| A24 | -1.316564E+02 | -8.624128E+01 | -2.699823E+00 |
| A26 | -3.164328E+01 | 2.301592E+01 | 4.525590E-01 |
| A28 | 2.702329E+01 | -3.653023E+00 | -4.326537E-02 |
| A30 | -4.903765E+00 | 2.606582E-01 | 1.714286E-03 |

[Table 16]

|  | S8 | S9 | S10 | S11 |
|---|---|---|---|---|
| K | 8.997691E+01 | -1.497668E+01 | -3.793977E+00 | -2.661244E+00 |
| A4 | 5.741604E-01 | 4.862719E-01 | -3.174671E-01 | -3.344795E-01 |
| A6 | -1.271530E+00 | -1.158818E+00 | 2.844974E-01 | 4.384829E-01 |
| A8 | 1.991015E+00 | 2.006660E+00 | -2.755297E-01 | -4.695438E-01 |
| A10 | -2.415101E+00 | -2.727553E+00 | 2.222978E-01 | 3.678177E-01 |
| A12 | 2.077785E+00 | 2.685658E+00 | -1.323870E-01 | -2.067933E-01 |
| A14 | -1.247679E+00 | -1.895941E+00 | 5.954030E-02 | 8.459837E-02 |
| A16 | 5.275164E-01 | 9.707088E-01 | -2.066646E-02 | -2.557637E-02 |
| A18 | -1.585518E-01 | -3.635777E-01 | 5.509551E-03 | 5.759619E-03 |
| A20 | 3.397061E-02 | 9.956011E-02 | -1.103781E-03 | -9.637842E-04 |
| A22 | -5.147054E-03 | -1.968659E-02 | 1.613125E-04 | 1.180994E-04 |
| A24 | 5.385525E-04 | 2.732683E-03 | -1.654790E-05 | -1.027703E-05 |
| A26 | -3.701193E-05 | -2.522288E-04 | 1.123373E-06 | 6.001132E-07 |
| A28 | 1.503274E-06 | 1.388085E-05 | -4.519222E-08 | -2.103899E-08 |
| A30 | -2.734462E-08 | -3.441723E-07 | 8.144252E-10 | 3.340348E-10 |

According to an embodiment, regarding the conditions of [Equation 1] to [Equation 7], exemplary values calculated based on lens data of the lens assemblies 400, 500, 600, and 700 in FIGS. 5, 9, 13, and 17 are listed in [Table 17] below.

[Table 17]

|  | Embodiment of FIG. 5 | Embodiment of FIG. 9 | Embodiment of FIG. 13 | Embodiment of FIG. 17 |
|---|---|---|---|---|
| Equation 1 | 0.642 | 0.643 | 0.642 | 0.643 |
| Equation 2 | 0.0067 | -0.047 | 0.005 | -0.047 |
| Equation 3 | 99.5 | 99.5 | 99.5 | 99.5 |
| Equation 4 | 0.138 | 0.147 | 0.142 | 0.147 |
| Equation 5 | 36.68 | 36.68 | 36.68 | 36.68 |
| Equation 6 | 1.014 | 1.014 | 1.014 | 1.014 |
| Equation 7 | 0.346 | 0.351 | 0.347 | 0.351 |

According to an embodiment, the lens assemblies 400, 500, 600, and 700 may provide good wide-angle performance with a field of view of approximately 100 degrees, when combined with a high-pixel image sensor having a maximum height of the imaging plane img of approximately 3.27mm, by satisfying the above-described conditions. In an embodiment, the aperture Stop is disposed closer to the object S than the lenses L1, L2, L3, L4, and L5, thereby facilitating reduction of the effective diameter of the first lens L1 or the second lens. For example, as the aperture Stop is disposed closer to the object S than the lenses L1, L2, L3, L4, and L5, the lens assemblies 400, 500, 600, and 700 may have small diameters and thus provide good wide-angle performance. In an embodiment, the gaps among the first lens L1, the second lens L2, and the third lens L3 arranged sequentially along the direction of the optical axis O are designed to be in a specified range, so that the lenses L1, L2, and L3 may be easily fixed or assembled without using spacers among them. For example, the flare phenomenon caused by the spacers may be suppressed, and the manufacturing cost may be reduced.

The effects achievable by the disclosure are not limited to those that have been described above, and other unmentioned effects may be clearly understood by those skilled in the art from the following description.

As described above, a lens assembly (e.g., the camera module 180, 280, 305, 321, or 313 or the lens assembly 210, 400, 500, 600 or 700 in FIGS. 1 to 4, FIG. 5, FIG. 9, FIG. 13, and/or FIG. 17) may include an aperture (e.g., Stop in FIG. 5, FIG. 9, FIG. 13, and/or FIG. 17), an image sensor (e.g., 230 or I in FIG. 2, FIG. 5, FIG. 9, FIG. 13, and/or FIG. 17) including an imaging plane (e.g., img in FIG. 5, FIG. 9, FIG. 13, and/or FIG. 17) receiving at least a portion of light incident through the aperture, and aligned with the aperture on an optical axis (e.g., O in FIG. 5, FIG. 9, FIG. 13, and/or FIG. 17), and five lenses (e.g., L1, L2, L3, L4, L5 in FIG. 5, FIG. 9, FIG. 13, and/or FIG. 17) sequentially arranged along a direction of the optical axis between the aperture and the image sensor, and including a first lens (e.g., L1 in FIG. 5, FIG. 9, FIG. 13, and/or FIG. 17) disposed closest to the aperture and having a positive refractive power, a second lens (e.g., L2 in FIG. 5, FIG. 9, FIG. 13, and/or FIG. 17) disposed second from the aperture and having a negative refractive power, a third lens (e.g., L3 in FIG. 5, FIG. 9, FIG. 13, and/or FIG. 17) disposed third from the aperture, a fourth lens (e.g., L4 in FIG. 5, FIG. 9, FIG. 13, and/or FIG. 17) disposed fourth from the aperture, and a fifth lens (e.g., L5 in FIG. 5, FIG. 9, FIG. 13, and/or FIG. 17) disposed closest to the image sensor and having a positive refractive power. In an embodiment, the lens assembly may satisfy the following [Conditional Expression 1], [Conditional Expression 2], and [Conditional Expression 3].

$$[\text{Conditional Expression 1}]$$

$$0.55 \leq \frac{OAL}{2IH} \leq 0.7$$

$$[\text{Conditional Expression 2}]$$

$$-0.05 \leq \frac{T23 - T12}{EFL} \leq 0.05$$

$$[\text{Conditional expression 3}]$$

$$90 =< FOV =< 110$$

Herein, "OAL" may be a distance between an object-side surface (e.g., the surface denoted by 'S2' in FIG. 5) or an aperture-side surface of the first lens L1 and the imaging plane img, measured on the optical axis, "IH" may be a maximum height of the imaging plane, "T12" may be a gap between the first lens and the second lens, measured on the optical axis, "T23" may be a gap between the second lens and the third lens, measured on the optical axis, "EFL" may be a total focal length of the lens assembly, and "FOV" may be a field of view of the lens assembly.

According to an embodiment, the lens assembly may satisfy the following [Conditional Expression 4] for an effective radius 'Y11' of the object-side surface of the first lens and an effective radius 'Y22' of an image sensor-side surface (e.g., the surface denoted by 'S5' in FIG. 5) of the second lens.

$$[\text{Conditional Expression 4}]$$

$$0.05 \leq \frac{Y22 - Y11}{EFL} \leq 0.16$$

According to an embodiment, the lens assembly may satisfy the following [Conditional Expression 5] for an Abbe number 'Vd1' of the first lens and an Abbe number 'Vd2' of the second lens.

$$[\text{Conditional Expression 5}]$$

$$20 =< Vd1 - Vd2 =< 45$$

According to an embodiment, each of the five lenses may include an inflection point (e.g., the point denoted by symbol '♦' in FIG. 5) on at least one of an object-side surface or an image sensor-side surface.

According to an embodiment, each of the third lens, the fourth lens, and the fifth lens may include inflection points on the object-side surface and the image sensor-side surface.

According to an embodiment, the lens assembly may satisfy the following [Conditional Expression 6] for the distance 'OAL' between the object-side surface or the aperture-side surface of the first lens and the imaging plane and a distance 'Tsi' from the aperture to the imaging plane on the optical axis.

$$[\text{Conditional Expression 6}]$$
$$0.95 \leq \frac{OAL}{Tsi} \leq 1.05$$

According to an embodiment, the first lens may have a meniscus shape having a convex object-side surface and a concave image sensor-side surface (e.g., the surface denoted by 'S3' in FIG. 5) in a paraxial region, and include an inflection point on the image sensor-side surface.

According to an embodiment, the second lens may have a concave object-side surface (e.g., the surface denoted by 'S4' in FIG. 5) and a concave image sensor-side surface in a paraxial region, and include an inflection point on the image sensor-side surface.

According to an embodiment, the third lens may have a concave object-side surface (e.g., the surface denoted by 'S6' in FIG. 5) and a convex image sensor-side surface (e.g., the surface denoted by 'S7' in FIG. 5) in a paraxial region.

According to an embodiment, each of the fourth lens and the fifth lens may have a convex object-side surface (e.g., the surfaces denoted by 'S8' and 'S10' in FIG. 5) and a concave image sensor-side surface (e.g., the surfaces denoted by 'S9' and 'S11' in FIG. 5) in a paraxial region.

According to an embodiment, the lens assembly may satisfy the following [Conditional Expression 7] for a distance 'BFL' from the image sensor-side surface of the fifth lens to the imaging plane on the optical axis, and the maximum height 'IH' of the imaging plane.

$$[\text{Conditional Expression 7}]$$
$$0.25 \leq \frac{BFL}{IH} \leq 0.45$$

According to an embodiment of the disclosure, an electronic device (e.g., the electronic devices 101, 102, 104, and 300 in FIGS. 1 to 4) may include a lens assembly (e.g., the camera module 180, 280, 305, 321, or 313 or the lens assembly 210, 400, 500, 600 or 700 in FIGS. 1 to 4, FIG. 5, FIG. 9, FIG. 13, and/or FIG. 17), and a processor (e.g., the processor 120 in FIG. 1 or the image signal processor 260 in FIG. 2) configured to obtain an image of a subject using the lens assembly. In an embodiment, the lens assembly may include an aperture (e.g., Stop in FIG. 5, FIG. 9, FIG. 13, and/or FIG. 17), an image sensor (e.g., 230 or I in FIG. 2, FIG. 5, FIG. 9, FIG. 13, and/or FIG. 17) including an imaging plane (e.g., img in FIG. 5, FIG. 9, FIG. 13, and/or FIG. 17) receiving at least a portion of light incident through the aperture, and aligned with the aperture on an optical axis (e.g., O in FIG. 5, FIG. 9, FIG. 13, and/or FIG. 17), and five lenses (e.g., L1, L2, L3, L4, L5 in FIG. 5, FIG. 9, FIG. 13, and/or FIG. 17) sequentially arranged along a direction of the optical axis between the aperture and the image sensor, and including a first lens (e.g., L1 in FIG. 5, FIG. 9, FIG. 13, and/or FIG. 17) disposed closest to the aperture and having a positive refractive power, a second lens (e.g., L2 in FIG. 5, FIG. 9, FIG. 13, and/or FIG. 17) disposed second from the aperture and having a negative refractive power, a third lens (e.g., L3 in FIG. 5, FIG. 9, FIG. 13, and/or FIG. 17) disposed third from the aperture, a fourth lens (e.g., L4 in FIG. 5, FIG. 9, FIG. 13, and/or FIG. 17) disposed fourth from the aperture, and a fifth lens (e.g., L5 in FIG. 5, FIG. 9, FIG. 13, and/or FIG. 17) disposed closest to the image sensor and having a positive refractive power. In an embodiment, the lens assembly may satisfy the following [Conditional Expression 8], [Conditional Expression 9], and [Conditional Expression 10].

$$[\text{Conditional Expression 8}]$$
$$0.55 \leq \frac{OAL}{2IH} \leq 0.7$$

[Conditional Expression 9]

$$-0.05 \leq \frac{T23 - T12}{EFL} \leq 0.05$$

[Conditional expression 10]

$$90 =< \text{FOV} =< 110$$

Herein, "OAL" may be a distance between an object-side surface (e.g., the surface denoted by 'S2' in FIG. 5) or an aperture-side surface of the first lens L1 and the imaging plane img, measured on the optical axis, "IH" may be a maximum height of the imaging plane, "T12" may be a gap between the first lens and the second lens, measured on the optical axis, "T23" may be a gap between the second lens and the third lens, measured on the optical axis, "EFL" may be a total focal length of the lens assembly, and "FOV" may be a field of view of the lens assembly.

According to an embodiment, the lens assembly may satisfy the following [Conditional Expression 11] for an effective radius 'Y11' of the object-side surface of the first lens and an effective radius 'Y22' of an image sensor-side surface (e.g., the surface denoted by 'S5' in FIG. 5) of the second lens.

[Conditional Expression 11]

$$0.05 \leq \frac{Y22 - Y11}{EFL} \leq 0.16$$

According to an embodiment, the lens assembly may satisfy the following [Conditional Expression 12] for an Abbe number 'Vd1' of the first lens and an Abbe number 'Vd2' of the second lens.

[Conditional Expression 12]

$$20 =< \text{Vd1-Vd2} =< 45$$

According to an embodiment, the lens assembly may satisfy the following [Conditional Expression 13] for the distance 'OAL' between the object-side surface or the aperture-side surface of the first lens and the imaging plane and a distance 'Tsi' from the aperture to the imaging plane on the optical axis.

[Conditional Expression 13]

$$0.95 \leq \frac{OAL}{Tsi} \leq 1.05$$

According to an embodiment, the lens assembly may satisfy the following [Conditional Expression 14] for a distance 'BFL' from the image sensor-side surface of the fifth lens to the imaging plane on the optical axis, and the maximum height 'IH' of the imaging plane.

[Conditional Expression 14]

$$0.25 \leq \frac{BFL}{IH} \leq 0.45$$

According to an embodiment, each of the five lenses may include an inflection point (e.g., the point denoted by symbol '♦' in FIG. 5) on at least one of an object-side surface or an image sensor-side surface.

According to an embodiment, each of the third lens, the fourth lens, and the fifth lens may include inflection points on the object-side surface and the image sensor-side surface.

According to an embodiment, the first lens may have a meniscus shape having a convex object-side surface and a concave image sensor-side surface (e.g., the surface denoted by 'S3' in FIG. 5) in a paraxial region, and include an inflection point on the image sensor-side surface.

According to an embodiment, the second lens may have a concave object-side surface (e.g., the surface denoted by 'S4' in FIG. 5) and a concave image sensor-side surface in a paraxial region, and include an inflection point on the image sensor-side surface.

While the disclosure has been described with respect to an embodiment by way of example, it should be understood that the embodiment is for illustrating and not for limiting the disclosure. It will be apparent to those skilled in the art that various changes in form and detailed configuration may be made without departing from the overall scope of the disclosure, including the appended claims and their equivalents.

**Claims**

1. A lens assembly (210; 400; 500; 600; 700) comprising:

   an aperture (Stop);
   an image sensor (I) including an imaging plane (img) receiving at least a portion of light incident through the aperture, and aligned with the aperture on an optical axis (O); and
   five lenses (L1, L2, L3, L4, L5) sequentially arranged along a direction of the optical axis between the aperture and the image sensor, and including a first lens (L1) disposed closest to the aperture and having a positive refractive power, a second lens (L2) disposed second from the aperture and having a negative refractive power, a third lens (L3) disposed third from the aperture, a fourth lens (L4) disposed fourth from the aperture, and a fifth lens (L5) disposed closest to the image sensor and having a positive refractive power, and
   wherein the lens assembly satisfies the following [Conditional Expression 1], [Conditional Expression 2], and [Conditional Expression 3],

   [Conditional Expression 1]

   $$0.55 \leq \frac{OAL}{2IH} \leq 0.7$$

   [Conditional Expression 2]

   $$-0.05 \leq \frac{T23\text{-}T12}{EFL} \leq 0.05$$

   [Conditional expression 3]

   $$90 =< FOV =< 110$$

   where "OAL" is a distance between an object-side surface (S2) or an aperture-side surface of the first lens (L1) and the imaging plane (img), measured on the optical axis, "IH" is a maximum height of the imaging plane, "T12" is a gap between the first lens and the second lens, measured on the optical axis, "T23" is a gap between the second lens and the third lens, measured on the optical axis, "EFL" is a total focal length of the lens assembly, and "FOV" is a field of view of the lens assembly.

2. The lens assembly of claim 1, wherein the lens assembly satisfies the following [Conditional Expression 4] for an effective radius 'Y11' of the object-side surface of the first lens and an effective radius 'Y22' of an image sensor-side surface (S5) of the second lens,

   [Conditional Expression 4]

   $$0.05 \leq \frac{Y22\text{-}Y11}{EFL} \leq 0.16$$

3. The lens assembly of claim 1 or 2, wherein the lens assembly satisfies the following [Conditional Expression 5] for an Abbe number 'Vd1' of the first lens and an Abbe number 'Vd2' of the second lens,

[Conditional Expression 5]

$$20 =< Vd1-Vd2 =< 45$$

4. The lens assembly of any one of claims 1 to 3, wherein each of the five lenses includes an inflection point on at least one of an object-side surface (S2, S4, S6, S8, S10) or an image sensor-side surface (S3, S5, S7, S9, S11).

5. The lens assembly of any one of claims 1 to 4, wherein each of the third lens, the fourth lens, and the fifth lens includes inflection points on the object-side surface (S6, S8, S10) and the image sensor-side surface (S7, S9, S11).

6. The lens assembly of any one of claims 1 to 5, wherein the lens assembly satisfies the following [Conditional Expression 6] for the distance 'OAL' between the object-side surface or the aperture-side surface of the first lens and the imaging plane and a distance 'Tsi' from the aperture to the imaging plane on the optical axis,

[Conditional Expression 6]

$$0.95 \le \frac{OAL}{Tsi} \le 1.05$$

7. The lens assembly of any one of claims 1 to 6, wherein the first lens has a meniscus shape having a convex object-side surface and a concave image sensor-side surface (S3) in a paraxial region, and includes an inflection point on the image sensor-side surface.

8. The lens assembly of any one of claims 1 to 7, wherein the second lens has a concave object-side surface (S4) and a concave image sensor-side surface in a paraxial region, and includes an inflection point on the image sensor-side surface.

9. The lens assembly of any one of claims 1 to 8, wherein the third lens has a concave object-side surface and a convex image sensor-side surface in a paraxial region.

10. The lens assembly of any one of claims 1 to 9, wherein each of the fourth lens and the fifth lens has a convex object-side surface and a concave image sensor-side surface in a paraxial region.

11. The lens assembly of any one of claims 1 to 10, which the lens assembly satisfies the following [Conditional Expression 7] for a distance 'BFL' from the image sensor-side surface (S11) of the fifth lens to the imaging plane on the optical axis, and the maximum height 'IH' of the imaging plane,

[Conditional Expression 7]

$$0.25 \le \frac{BFL}{IH} \le 0.45$$

12. The lens assembly of claim 1, wherein each of the five lenses includes an inflection point on at least one of an object-side surface (S2, S4, S6, S8, S10) or an image sensor-side surface (S3, S5, S7, S9, S11), and
wherein each of the third lens, the fourth lens, and the fifth lens includes inflection points on the object-side surface (S6, S8, S10) and the image sensor-side surface (S7, S9, S11).

13. The lens assembly of claim 1, wherein the first lens has a meniscus shape having a convex object-side surface and a concave image sensor-side surface (S3) in a paraxial region, and includes an inflection point on the image sensor-side surface, and
wherein the second lens has a concave object-side surface (S4) and a concave image sensor-side surface in a paraxial region, and includes an inflection point on the image sensor-side surface.

14. The lens assembly of claim 1, wherein the third lens has a concave object-side surface and a convex image sensor-side surface in a paraxial region, and
wherein each of the fourth lens and the fifth lens has a convex object-side surface and a concave image sensor-side surface in a paraxial region.

**15.** An electronic device (101; 102; 104; 300) comprising:

a lens assembly (210; 400; 500; 600; 700) according to any one of claims 1 to 14; and
a processor (120; 260) configured to obtain an image of a subject using the lens assembly.

FIG. 1

EP 4 556 980 A1

200

280

CAMERA MODULE

220

FLASH

210

230

LENS ASSEMBLY

IMAGE SENSOR

240

IMAGE STABILIZER

250

MEMORY

260

IMAGE SIGNAL PROCESSOR

FIG. 2

FIG. 3

FIG. 4

FIG. 5

LONGITUDIANL SPHERICAL ABER.

| | |
|---|---|
| —— | 656.2700 NM |
| – – – – | 587.5600 NM |
| —— | 546.0700 NM |
| ·········· | 486.1300 NM |
| — · — | 435.8300 NM |

FIG. 6

ASTIGMATIC FIELD CURVES

IMG HT

S

T

3.27

2.45

1.63

0.82

-0.10  -0.05  0.0  0.05  0.10

FOCUS (MM)

# FIG. 7

DISTORTION

IMG HT

3.27

2.45

1.63

0.82

-5.0  -2.5  0.0  2.5  5.0

DISTORTION (%)

# FIG. 8

500

Stop
L1
L2
L3
L4
L5
F
img

S
O
S2
S5
I

FIG. 9

FIG. 10

ASTIGMATIC FIELD CURVES

IMG HT

FOCUS (MM)

# FIG. 11

DISTORTION

DISTORTION (%)

# FIG. 12

FIG. 13

LONGITUDIANL SPHERICAL ABER.

656.2700 NM
587.5600 NM
546.0700 NM
486.1300 NM
435.8300 NM

FIG. 14

ASTIGMATIC FIELD CURVES
IMG HT

FIG. 15

DISTORTION

FIG. 16

FIG. 17

LONGITUDIANL SPHERICAL ABER.

656.2700 NM
587.5600 NM
546.0700 NM
486.1300 NM
435.8300 NM

1.00

0.75

0.50

0.25

-0.100  -0.020   0.0   0.050   0.100
FOCUS (MM)

FIG. 18

ASTIGMATIC FIELD CURVES

IMG HT

FOCUS (MM)

FIG. 19

DISTORTION

IMG HT

DISTORTION (%)

FIG. 20

## INTERNATIONAL SEARCH REPORT

| International application No. |
| --- |
| **PCT/KR2023/010504** |

### A. CLASSIFICATION OF SUBJECT MATTER

**G02B 13/00**(2006.01)i; **G02B 9/60**(2006.01)i; **G02B 13/18**(2006.01)i; **G02B 3/02**(2006.01)i; **G02B 3/00**(2006.01)i; **G03B 30/00**(2021.01)i

According to International Patent Classification (IPC) or to both national classification and IPC

### B. FIELDS SEARCHED

Minimum documentation searched (classification system followed by classification symbols)

G02B 13/00(2006.01); G02B 13/18(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 조리개(stop), 이미지 센서(image sensor), 초점 거리(focal length), 화각(FOV), 변곡점(inflection point), 메니스커스 렌즈(meniscus lens)

### C. DOCUMENTS CONSIDERED TO BE RELEVANT

| Category* | Citation of document, with indication, where appropriate, of the relevant passages | Relevant to claim No. |
| --- | --- | --- |
| X | JP 2022-051649 A (RAYTECH OPTICAL CHANGZHOU CO., LTD.) 01 April 2022 (2022-04-01)<br>See paragraphs [0017], [0020]-[0055], [0063], [0087] and [0092] and figure 1. | 1,3-5,7,9-12,14-15 |
| A | | 2,6,8,13 |
| A | JP 2021-033277 A (AAC OPTICS SOLUTIONS PTE. LTD.) 01 March 2021 (2021-03-01)<br>See paragraphs [0014], [0020]-[0021], [0048], [0054] and [0090] and figure 1. | 1-15 |
| A | KR 10-2016-0059239 A (KOLEN CO., LTD.) 26 May 2016 (2016-05-26)<br>See paragraphs [0057]-[0063] and [0074] and figure 1. | 1-15 |
| A | JP 2021-135485 A (AAC OPTICS (CHANGZHOU) CO., LTD.) 13 September 2021 (2021-09-13)<br>See paragraphs [0019], [0027]-[0044], [0053], [0060] and [0089] and figure 1. | 1-15 |
| A | JP WO2013-175782 A1 (FUJIFILM CORP.) 12 January 2016 (2016-01-12)<br>See paragraphs [0027]-[0032] and figure 1. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 October 2023** | **24 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010504**

| Patent document cited in search report | | | Publication date (day/month/year) | Patent family member(s) | | | Publication date (day/month/year) |
|---|---|---|---|---|---|---|---|
| JP | 2022-051649 | A | 01 April 2022 | CN | 111929843 | A | 13 November 2020 |
| | | | | CN | 111929843 | B | 18 December 2020 |
| | | | | JP | 6991695 | B1 | 12 January 2022 |
| | | | | US | 2022-0091380 | A1 | 24 March 2022 |
| | | | | WO | 2022-062072 | A1 | 31 March 2022 |
| JP | 2021-033277 | A | 01 March 2021 | CN | 110501806 | A | 26 November 2019 |
| | | | | CN | 110501806 | B | 09 April 2021 |
| | | | | JP | 6848111 | B2 | 24 March 2021 |
| | | | | US | 11487090 | B2 | 01 November 2022 |
| | | | | US | 2021-0048644 | A1 | 18 February 2021 |
| | | | | WO | 2021-031239 | A1 | 25 February 2021 |
| KR | 10-2016-0059239 | A | 26 May 2016 | CN | 105607225 | A | 25 May 2016 |
| | | | | KR | 10-1710320 | B1 | 27 February 2017 |
| | | | | US | 2016-0139370 | A1 | 19 May 2016 |
| JP | 2021-135485 | A | 13 September 2021 | CN | 111198432 | A | 26 May 2020 |
| | | | | CN | 111198432 | B | 30 July 2021 |
| | | | | JP | 7035157 | B2 | 14 March 2022 |
| | | | | US | 11662553 | B2 | 30 May 2023 |
| | | | | US | 2021-0263280 | A1 | 26 August 2021 |
| | | | | WO | 2021-168884 | A1 | 02 September 2021 |
| JP | WO2013-175782 | A1 | 12 January 2016 | CN | 104395806 | A | 04 March 2015 |
| | | | | CN | 104395806 | B | 30 June 2017 |
| | | | | JP | 5687390 | B2 | 18 March 2015 |
| | | | | TW | M464679 | U | 01 November 2013 |
| | | | | US | 2015-0077863 | A1 | 19 March 2015 |
| | | | | US | 9170403 | B2 | 27 October 2015 |
| | | | | WO | 2013-175782 | A1 | 28 November 2013 |

Form PCT/ISA/210 (patent family annex) (July 2022)